(19) **Europäisches Patentamt European Patent Office Office européen des brevets**

(11) **EP 1 779 561 B1**

(12) **FASCICULE DE BREVET EUROPEEN**

(45) Date de publication et mention
de la délivrance du brevet:
**18.07.2012 Bulletin 2012/29**

(51) Int Cl.:
***H04B 10/30*** *(2006.01)*

(21) Numéro de dépôt: **05752707.9**

(22) Date de dépôt: **23.05.2005**

(86) Numéro de dépôt international:
**PCT/EP2005/052348**

(87) Numéro de publication internationale:
**WO 2005/117306 (08.12.2005 Gazette 2005/49)**

(54) **PROCEDE ET APPAREILLAGE POUR COMMUNIQUER A DISTANCE EN UTILISANT LA PHOTOLUMINESCENCE OU LA THERMOLUMINESCENCE**

VERFAHREN UND EINRICHTUNG ZUR FERNKOMMUNIKATION DURCH VERWENDUNG VON PHOTOLUMINESZENZ ODER THERMOLUMINESZENZ

METHOD AND DEVICE FOR REMOTELY COMMUNICATING BY USING PHOTOLUMINESCENCE OR THERMOLUMINESCENCE

(84) Etats contractants désignés:
**AT BE BG CH CY CZ DE DK EE ES FI FR GB GR HU IE IS IT LI LT LU MC NL PL PT RO SE SI SK TR**

(30) Priorité: **26.05.2004 FR 0405717
12.04.2005 FR 0503659**

(43) Date de publication de la demande:
**02.05.2007 Bulletin 2007/18**

(73) Titulaire: **SAQUANT
03190 Givarlais (FR)**

(72) Inventeurs:
• **DESBRANDES, Robert
F-03190 Givarlais (FR)**
• **VAN GENT, Daniel Lee
Baton Rouge, Louisiana 70816 (US)**

(56) Documents cités:
**US-A1- 2003 133 714**

• **D.L. VAN GENT: "Remote Stimulated Triggering of Quantum Entangled Nuclear Metastable States of 115mln"[Online] novembre 2004 (2004-11), XP002350122 Louisiana State University, Baton Rouge, USA Extrait de l'Internet: URL:http://arxiv.org/ftp/nucl-ex/papers/04 11/0411050.pdf> [extrait le 2005-10-19]**
• **WEINFURTER H ET AL: "Quantum communication and entanglement" CIRCUITS AND SYSTEMS, 2000. PROCEEDINGS. ISCAS 2000 GENEVA. THE 2000 IEEE INTERNATIONAL SYMPOSIUM ON MAY 28-31, 2000, PISCATAWAY, NJ, USA,IEEE, vol. 2, 28 mai 2000 (2000-05-28), pages 236-239, XP010502704 ISBN: 0-7803-5482-6**

**Description**

Domaine technique :

Certains cristaux deviennent excitées lorsqu'ils sont illuminés par un rayonnement de particules, de gamma, de rayons X, de lumière blanche ou ultraviolette. Ces cristaux peuvent être de nature organique ou minérale. Leur désexcitation peut se produire immédiatement dans le cas de la photoluminescence ou être retardé dans le cas de la thermoluminescence. Deux sortes d'excitation sont possibles : les molécules peuvent être excitées sous forme vibrationnelle dans le cas de la photochimie ou sous forme d'électrons de valence éjectés et piégés dans des impuretés ou dislocations du réseau cristallin dans le cas de la photoluminescence et de la thermoluminescence.

La photochimie se produit généralement avec des échantillons sous forme liquide alors que la photoluminescence et de la thermoluminescence se produisent généralement avec des échantillons sous forme solide. En photochimie ultraviolette l'énergie des photons ultraviolets est transférée aux molécules. Selon la loi de Einstein, un seul photon excite une seule molécule. En conséquence, dans la collision, le photon est complètement absorbé par la molécule et l'énergie acquise est égale à l'énergie du photon. Cette énergie est emmagasinée sous forme vibrationnelle. La durée de vie de l'état excité est relativement courte et varie de quelques nanosecondes à quelques secondes.

En photoluminescence l'énergie des photons de lumière blanche ou ultraviolette est transférée aux électrons de valence des molécules qui sont capturés par les impuretés ou dislocations de réseau cristallin. La désexcitation due au retour des électrons sur leur orbite de valence se produit à la température ambiante avec émission de rayonnement visible. La durée de vie de l'état excité varie avec le type de molécule, le type d'impuretés ou de dislocation et la température. Les cristaux les plus courants contiennent des molécules de sulfure de zinc ou d'aluminate de strontium. Ils sont généralement dopés avec des traces de métaux tels que le calcium, le bismuth, le cuivre, le manganèse, l'europium ou le dysprosium pour obtenir différentes couleurs de luminescence. La concentration en atomes dopants varie généralement de 10 à 1000 parties par million. Le tableau 1 indique les principaux cristaux utilisés en photoluminescence. Ces cristaux sont utilisés et commercialisés en particulier dans les signaux lumineux luminescents. La photoluminescence ainsi obtenue se différencie de la phosphorescence, généralement obtenue en dopant les cristaux de sulfure de zinc avec des traces d'un produit radioactif tel que l'uranium. Dans ce cas, la luminescence se produit sans excitation préalable par un rayonnement ultraviolet ou visible.

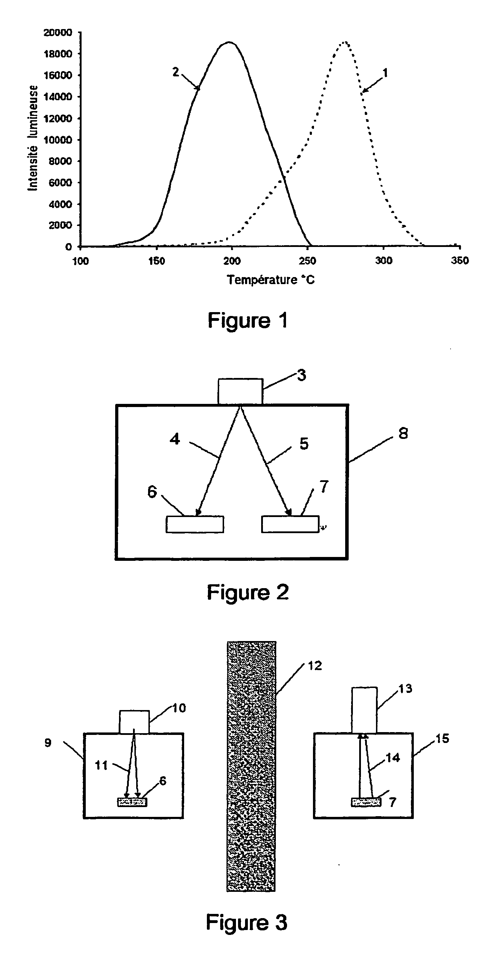

La thermoluminescence est un phénomène physique qui se traduit par la propriété qu'ont certains cristaux d'émettre de la lumière quand on les chauffe comme le montrent les courbes (1) et (2) de la figure 1. Cette luminescence ne se produit que si le chauffage a été précédé d'une irradiation due à des rayonnements ionisants, par exemple à l'exposition à la radioactivité naturelle pendant des milliers d'années ou à l'exposition à un rayonnement artificiel gamma, X, alpha, béta, neutron, ultraviolet ou visible, pendant quelques minutes ou quelques heures.

La thermoluminescence est utilisée pour la datation en géologie et en archéologie selon le principe suivant : depuis sa cuisson, une céramique accumule une dose archéologique due à l'irradiation naturelle. La re-cuisson en laboratoire d'un prélèvement en poudre permet de mesurer la durée d'irradiation à partir de la quantité de lumière émise. Si l'échantillon est chauffé une deuxième fois il n'émet plus de lumière à moins d'avoir reçu une nouvelle dose d'irradiation entre temps.

L'équation fondamentale de la datation par thermoluminescence est donnée par

$$ATL = DARG / DA$$

ATL     est l'age en années,
DARG   est la dose archéologique ou géologique,
DA      est la dose annuelle.

La dose archéologique ou géologique, DARG, est la quantité d'énergie de thermoluminescence par unité de masse stockée par le cristal depuis sa dernière chauffe. Cette quantité d'énergie est exprimée en Gray (1 Gy = 1 J/kg). Elle provient de la désintégration des éléments radioactifs contenus dans le cristal et dans son environnement La dose archéologique est déterminée en comparant la thermoluminescence naturelle des cristaux à celle induite en laboratoire par une dose connue provenant d'une source radioactive calibrée.

La dose annuelle DA est la quantité d'énergie de thermoluminescence par unité de masse accumulée en une année par le cristal, également exprimée en Gray. La dose annuelle est généralement déduite des concentrations en radioéléments de l'échantillon et du milieu d'enfouissement.

La courbe (1) de la figure 1 représente la réponse typique d'un échantillon de calcite stalagmitique lors de la montée en température.

Dans les applications géologiques ou archéologiques, la thermoluminescence mesure la période écoulée depuis la dernière chauffe qui ne correspond pas forcément à l'événement à dater (fabrication pour les terres cuites, dernière utilisation pour un four, etc.). Incendies, restauration à l'aide d'une source chauffante, peuvent fausser l'interprétation des résultats expérimentaux. Le matériau doit contenir des cristaux thermoluminescents qui sont suffisamment sensibles à l'irradiation (ex. : quartz, feldspaths, zircons, etc.). Les cristaux ne doivent pas être saturés en énergie car leur « capacité d'emmagasinage » limite l'utilisation de la technique. Les plus anciens âges obtenus jusqu'à présent sont de l'ordre de 700 000 ans. En datation archéologique, les objets ne doivent pas avoir subi une quelconque irradiation artificielle (X, gamma, neutrons et autres rayonnements ionisants) avant l'analyse par thermoluminescence.

La thermoluminescence est également utilisée pour déterminer les doses de rayonnement ionisant subies en un lieu donné. Ces doses peuvent être mesurées dans un laboratoire ou sur un individu pour assurer la sécurité dans l'emploi des rayonnements ionisants. La technique est nommée « dosimétrie par thermoluminescence ». Certains cristaux comme le fluorure de lithium (LiF), le fluorure de calcium ($CaF_2$), le borate de lithium ($Li_2B_4O_7$), le sulfate de calcium ($CaSO_4$), et l'oxyde d'aluminium ($Al_2O_3$), activées par des traces de métaux de transition, de terres rares ou de carbone, ont la propriété d'être excités sous l'influence de rayonnements ionisants. Ils deviennent luminescents par chauffage et la dose de rayonnement ionisant peut être calculée. Lors de la montée en température d'échantillons irradiés d'oxyde d'aluminium dopé au carbone ($Al_2O_3$:C), par exemple, la luminescence commence vers 125°C et atteint un maximum vers 200°C comme le montre la Figure 1, courbe (2). La montée en température par chauffage peut être remplacée par une exposition aux rayons d'un laser, par exemple infrarouge.

La luminescence à température ambiante n'est pas strictement nulle et l'excitation disparaît lentement (fading, décroissance du signal obtenu avec le temps). De même un fading inverse se produit pour les échantillons stockés pendant longtemps car ils sont légèrement irradiés par les rayons cosmiques et le rayonnement nucléaire ambiant. On a donc dans ce cas une augmentation de l'excitation. La chute d'intensité due au fading est par exemple de l'ordre de 3% en 3 mois pour le cristal d'oxyde d'aluminium dopé au carbone et à la température ambiante. La demi-vie d'un tel échantillon initialement irradié est donc d'environ 5 ans, c'est-à-dire que l'intensité de sa luminescence décroît de moitié en 5 ans.

Le verre borosilicate peut également être utilisé comme matériau thermoluminescent. En effet, ce verre normalement transparent, a la propriété de devenir opaque et de couleur marron sous l'effet des radiations ionisantes. Chauffé à 200°C, il perd progressivement sa coloration. Sa demi-vie à la température ambiante est de l'ordre de 10 ans.

Les phénomènes de photoluminescence et de thermoluminescence s'expliquent par la structure imparfaite des cristaux qui contiennent toujours en nombre élevé des défauts, qu'il s'agisse de défauts de construction, tels que des lacunes ou des dislocations, ou de la présence d'atomes étrangers à la composition chimique de base (impuretés) ou atomes de dopage. L'énergie reçue par les électrons du cristal au cours de l'irradiation modifie leurs niveaux énergétiques.

Dans la théorie des bandes, valable pour la photoluminescence et la thermoluminescence, on explique le phénomène avec la séquence suivante :

- L'ionisation par rayonnement libère des électrons dans la bande de valence et des trous se forment; les électrons sont projetés dans le continuum énergétique de la bande de conduction.
- Les électrons sont capturés par des pièges constitués par des impuretés ou des dislocations du réseau du cristal dans la bande interdite et les électrons sont alors dans un état métastable.
- Cet état métastable peut durer de quelques microsecondes à des milliards d'années.
- L'énergie calorifique ou optique appliquée au cristal permet aux électrons de quitter les pièges. Les électrons reviennent alors dans la bande de valence en émettant des photons qui produisent la thermoluminescence.

Le même phénomène se produit avec la photoluminescence sans apport d'énergie hors l'énergie calorifique due à la température. Le retour vers la bande de valence peut toutefois se produire sans rayonnement, par conversion interne. Les matériaux photoluminescents ou thermoluminescents peuvent être réutilisés.

Le fading s'explique par l'effet tunnel des électrons qui ont une faible probabilité, mais tout de même une probabilité finie, de traverser la barrière de potentiel qui leur permet de quitter les pièges. Par exemple, la photoluminescence peut être interprétée comme un important fading.

Le fading est donné par l'équation :

$$Tau = A \exp(E/kT)$$

Ou

Tau     est le temps moyen de l'électron passé dans le piège,

A     est une constante dépendant du matériau,

E     est la différence d'énergie entre celle du piège et celle de la bande de conduction,

k     est la constante de Boltzmann,

T     est la température absolue du matériau.

Dans le cas des matériaux utilisés en dosimétrie par exemple, pour un piège peu profond, E = 0,034 eV, et pour un piège profond E = 0,042 eV. Lorsque T atteint 120°C (393 K), kT = 0.034 eV et les pièges peu profonds se vident. Lorsque T atteint 220°C (493 K), kT = 0.042 eV et les pièges profonds se vident.

Les électrons dans les deux cas émettent, en revenant sur leur orbite de valence, des photons visibles d'une énergie allant de 1.8 eV à 3 eV (690nm à 410 nm), selon les matériaux photoluminescents ou thermoluminescents utilisés.

Il est connu de l'homme de l'art, en particulier pour la sécurité nucléaire, que le chauffage des échantillons thermoluminescents irradiés peut s'effectuer de différentes manières, par exemple par résistance électrique ou à l'aide de rayons infrarouges ou visibles de laser, ce qui permet un chauffage rapide et un meilleur rapport de signal sur bruit sur de petits échantillons ou des portions d'échantillons du matériau. La différence de température du pic de luminescence entre les minéraux et les matériaux utilisés en dosimétrie provient du type de piéges (traps). Dans les minéraux les piéges sont généralement profonds (deep traps) et dans les matériaux de dosimétrie les piéges sont généralement peu profonds (shallow traps). Plus d'énergie calorifique ou optique est donc nécessaire pour énergétiser les électrons des piéges profonds. En photoluminescence, les piéges sont très peu profonds et se vident à la température ambiante sous l'action des vibrations de réseau. Ceci explique les variations de luminescence avec la température.

Le tableau 2 contient une liste des principales substances utilisées en thermoluminescence avec leurs caractéristiques principales : formule chimique, température pour laquelle le maximum du signal est atteint, longueur d'onde des photons émis, saturation en énergie, et fading (décroissance du signal obtenu avec le temps).

Les substances naturelles ont généralement une longue durée de vie et par conséquent un très faible fading, ceci est le résultat de pièges profonds. Les données publiées varient car ces matériaux naturels contiennent des impuretés en quantité et de nature variable. Néanmoins ces matériaux peuvent être utilisés dans le cadre de cette invention à leur état naturel ou sous une forme artificielle contenant les mêmes éléments.

Les substances artificielles ont généralement une faible durée de vie et par conséquent un fading important qui correspond à des pièges peu profonds d'où les électrons peuvent être éjectés plus facilement. La durée de vie de ces substances permet également leur utilisation dans cette invention soit en photoluminescence soit en thermoluminescence.

Les substances thermoluminescentes très sensibles obtenues artificiellement peuvent aussi être excitées par des rayons ultraviolets ou visibles de même que les substances photoluminescentes. Dans ce cas les pièges sont peu profonds et une stimulation par rayons infrarouges est possible.

Technique antérieure :

Les propriétés de photoluminescence sont utilisées pour les signaux lumineux qui sont excités durant le jour et luminescents la nuit.

Les propriétés de thermoluminescence sont utilisées essentiellement pour la datation géologique et archéologique. En dosimétrie, les propriétés de thermoluminescence sont utilisées pour la protection contre les rayonnements ionisants nucléaires et ultraviolets, la surveillance nucléaire environnementale, et la détermination de pollutions nucléaires accidentelles ou militaires passées.

La publication de brevet US 2003/0133714 A1 (GAT ERANN) du 17 juillet 2003 décrit une méthode et un appareil pour communiquer en utilisant l'intrication quantique.

**Exposé de l'Invention :**

La présente invention concerne un procédé et un appareillage pour communiquer ou commander à distance en utilisant la photoluminescence ou la thermoluminescence. Dans cette invention, il est fait usage de la photoluminescence ou de la thermoluminescence ayant au moins un état excité obtenu par bombardement, irradiation ou illumination au moyen d'au moins une source émettant directement ou indirectement des groupes de particules intriquées élémentaires telles que :

- des photons intriqués gamma, X, ultraviolets ou visibles,
- des électrons intriqués, des positrons intriqués, des protons intriqués, des atomes intriqués, des molécules intriqués, des micelles intriquées,
- ou encore des combinaisons ou des ensembles de ces particules,

Par exemple dans le cas d'emploi de photons intriqués, la photoluminescence ou la thermoluminescence est causée par une irradiation ou une illumination artificielle de deux ou plusieurs échantillons d'un ou plusieurs matériaux photoluminescents ou thermoluminescents définis précédemment, à l'aide d'un rayonnement ionisant composé de groupes de particules telles que des photons intriqués issus directement ou indirectement d'une source.

Chaque groupe de photons intriqués est constitué de photons émis ensembles ou à de très courts intervalles par la même particule de la source, par exemple : électron, noyau, atome, molécule. Les sources de photons intriqués ad hoc utilisables pour cette invention sont, par exemple:

- Des matériaux radioactifs naturels ou artificiels produisant un rayonnement en cascade. Par exemple, l'atome de Cobalt 60 émet presque simultanément deux gamma qui sont intriqués et qui peuvent être utilisés pour irradier un matériau photoluminescent ou thermoluminescent.
- Des cibles bombardées par des particules tels que des électrons, des protons, etc., qui émettent des photons intriqués par effet Bremsstrahlung. Par exemple, dans les accélérateurs d'électrons qui bombardent des cibles, par exemple de tungstène ou de verres phosphorescents, des groupes de photons intriqués gamma, X, ultraviolets ou visibles sont produits par le phénomène de Bremsstrahlung.
- Des matériaux contenant des atomes excités par la chaleur qui provoque des émissions en cascade de photons. Par exemple des lampes à mercure émettent des groupes de photons ultraviolets intriqués et qui peuvent être utilisés pour irradier ou illuminer un matériau photoluminescent ou thermoluminescent.
- Des cristaux non linéaires qui, lorsqu'ils sont excités par un rayon laser ad hoc (« pump »), produisent deux nouveaux faisceaux divergents (« signal » et « idler ») de faible puissance. Ces nouveaux faisceaux sont totalement ou presque totalement intriqués, c'est à dire que chaque photon de l'un est intriqué avec un photon de l'autre. Par exemple les cristaux BBO composés de borate de baryum béta (beta-$BaB_2O_4$) peuvent émettre deux faisceaux de groupes de photons intriqués ultraviolets ou visibles qui peuvent être utilisés pour irradier ou illuminer un matériau photoluminescent ou thermoluminescent.

Remarque : il y a lieu de distinguer le bombardement d'une cible employé dans l'effet Bremsstrahlung pour produire des photons intriqués, du bombardement par des particules intriquées du matériau photoluminescent ou thermoluminescent.

Dans cette invention, les échantillons de matériaux photoluminescents ou thermoluminescents sont bombardés, irradiés ou illuminés simultanément par des particules intriquées, en particulier des photons intriqués provenant d'une ou plusieurs des sources ad hoc mentionnées ci-dessus, pendant une durée dépendant de l'optimisation du processus, les sources produisant des groupes de deux ou plusieurs photons intriqués. Dans le bombardement, l'irradiation ou l'illumination, seules les particules intriquées réparties sur deux ou plusieurs échantillons, qui ont chacune excité un piège, sont utiles pour la liaison quantique car l'intrication est transférée des particules audits pièges. Dans le cas particulier d'un faisceau de particules commun aux deux échantillons, les liaisons quantiques obtenues sont partielles en ce que des pièges intriqués sont localisés sur le même échantillon, et d'autres sont répartis sur plusieurs échantillons. Dans le cas où des faisceaux intriqués séparés sont produits, par exemple avec des cristaux non linéaires de type BBO, une optimisation du procédé consiste à diriger un faisceau sur un des échantillons et l'autre faisceau sur l'autre échantillon. En conséquence, l'intrication des échantillons est totalement ou presque totalement complète. Les surfaces des échantillons sur lesquelles le processus est appliqué peuvent aller de 100 nanomètres carrés à un mètre carré selon l'optimisation de la méthode utilisée et des technologies employées.

La présente invention fait usage d'un phénomène prévu par la Mécanique Quantique selon lequel deux ou plusieurs particules intriquées, dans cette invention les électrons piégés, conservent une liaison quantique lorsqu'elles sont séparées par une distance quelconque, liaison quantique qui est pratiquement instantanée. En conséquence, la désexcitation de l'une provoque la désexcitation de l'autre ou des autres. Cette liaison quantique peut être transférée de particule à particule par interaction. Dans le cas des matériaux photoluminescents ou thermoluminescents, la liaison quantique est transférée des particules intriquées telles que des photons aux électrons de la bande de valence qui sont par la suite capturés dans les pièges. La désexcitation des électrons dans les pièges (appelée stimulation par la suite) se manifeste par une émission de photons visibles (phénomène de luminescence). Dans le cas d'une liaison quantique entre deux électrons piégés, la stimulation de l'un provoque également la désexcitation corrélée de l'autre électron qui se manifeste par une émission de photons visibles (phénomène de luminescence). Cette luminescence, corrélée à la stimulation, est mesurée par un capteur, par exemple, un ou des tubes photomultiplicateurs, une ou des photodiodes, etc.

De nombreux articles et ouvrages existent sur le sujet de l'intrication. Les principaux articles sont listés en fin de description.

Les échantillons de matériaux photoluminescents ou thermoluminescents après bombardement, irradiation ou illumination par des groupes de particules intriqués, tels que décrits ci-dessus, sont séparés spatialement. Dans le cas de deux échantillons intriqués, l'un le « maître » est stimulé et la luminescence de l'autre l'« esclave » est mesurée. Plusieurs techniques ad hoc peuvent être utilisées pour exploiter les liaisons quantiques entre échantillons. Par exemple en thermoluminescence deux techniques par chauffage et deux techniques optiques sont utilisées pour stimuler l'échantillon maître :

- L'échantillon maître peut être chauffé sur sa totalité au moyen d'un dispositif externe ou interne, par exemple par une résistance, un faisceau de lumière infrarouge, visible, ultraviolette, ou par le phénomène d'induction d'éléments incorporés à l'échantillon, ce qui provoque une variation de sa luminescence et également une variation partiellement corrélée de la luminescence de l'échantillon esclave qui est mesurée sur tout ou partie dudit échantillon esclave. Dans ce cas, tous les piéges peuvent se vider complètement. En particulier cette technique peut être appliquée aux piéges profonds.
- l'échantillon maître peut être chauffé en un point de sa surface, par exemple par le faisceau convergent d'une lentille ou par un faisceau laser de lumière infrarouge, visible ou ultraviolette, ce qui provoque l'échauffement de ce point et une variation de sa luminescence et également une variation partiellement corrélée de la luminescence, due à la désexcitation des électrons intriqués correspondants des pièges localisés sur la totalité de l'échantillon esclave, qui est mesurée sur tout ou partie dudit échantillon esclave. Les piéges du point chauffé de l'échantillon maître sont en général vidés complètement et une partie des piéges de l'échantillon esclave sont vidées. De multiples mesures peuvent être faites sur un seul groupe d'échantillons intriqués. En particulier cette technique peut être appliquée aux piéges profonds.

- l'échantillon maître peut être illuminé très brièvement dans sa totalité, par exemple par un flash lumière infrarouge, visible ou ultraviolette, ce qui provoque le vidage de quelques piéges avec une variation de luminescence, et également une variation partiellement corrélée de la luminescence de l'échantillon esclave qui est mesurée sur tout ou partie dudit échantillon esclave. Un grand nombre de mesures peuvent ainsi être faites car peu de piéges sont vidés à chaque flash. En particulier cette technique peut être appliquée aux piéges peu profonds. Cependant, des piéges profonds peuvent être transférés vers des piéges peu profonds par stimulation photonique.
- L'échantillon maître peut être illuminé très brièvement sur une petite partie de sa surface, par exemple par le flash de lumière infrarouge, visible ou ultraviolette d'un laser ou d'une lentille convergente, ce qui provoque le vidage de quelques piéges de ladite petite surface de l'échantillon maître avec une variation de luminescence, et également une variation partiellement corrélée de la luminescence de l'échantillon esclave qui est mesurée sur tout ou partie dudit échantillon esclave. Un grand nombre de mesures peuvent ainsi être faites sur chaque petite surface car peu de pièges sont vidés à chaque flash. En particulier cette technique peut être appliquée aux piéges peu profonds. Cependant, des piéges profonds peuvent également être transférés vers des piéges peu profonds par stimulation photonique.

Dans un mode particulier d'optimisation des techniques de stimulation optiques précédentes, l'échantillon maître et / ou l'échantillon esclave peuvent être portés à une température contrôlée, par exemple constante, comprise entre 0°C et 200°C afin de faciliter le vidage des piéges des échantillons pendant la mesure de luminescence de l'échantillon esclave.

Par exemple en photoluminescence, deux techniques optiques sont utilisables pour stimuler l'échantillon maitre :

- l'échantillon maître peut être illuminé très brièvement dans sa totalité, par exemple par un flash de lumière infrarouge, ou éventuellement visible ou ultraviolette, ce qui provoque le vidage supplémentaire de quelques piéges avec une variation de luminescence, et également une variation partiellement corrélée de la luminescence de l'échantillon esclave qui est mesurée sur tout ou partie dudit échantillon esclave. Un grand nombre de mesures peuvent ainsi être faites car peu de piéges sont vidés à chaque flash.
- l'échantillon maître peut être illuminé très brièvement sur une petite partie de sa surface, par exemple par le flash de lumière infrarouge, ou éventuellement visible ou ultraviolette, d'un laser ou d'une lentille convergente, ce qui provoque le vidage supplémentaire de quelques piéges de ladite petite surface de l'échantillon maître avec une variation de luminescence, et également une variation partiellement corrélée de la luminescence de l'échantillon esclave qui est mesurée sur tout ou partie dudit échantillon esclave. Un grand nombre de mesures peuvent ainsi être faites sur chaque petite surface car peu de piéges sont vidés à chaque flash.

En thermoluminescence et en photoluminescence, les techniques décrites ci-dessus peuvent être utilisées pour communiquer une ou plusieurs informations entre un ou plusieurs échantillons intriqués maîtres et un ou plusieurs échantillons intriqués esclaves. Dans un mode particulier de l'invention, les échantillons intriqués peuvent être successivement maître pour au moins un échantillon et esclave pour au moins un autre, puis inversement pour effectuer une communication en semi-duplex sans sortir du cadre de l'invention. Dans un mode particulier de l'invention, les échantillons intriqués, par exemple composés de plusieurs matériaux thermoluminescents exploités par stimulations optiques, peuvent être simultanément maîtres et esclaves pour effectuer une communication en duplex sans sortir du cadre de l'invention. Lorsque la technique permet plusieurs mesures sur un même groupe d'échantillons intriqués, elle peut être utilisée soit pour communiquer une information sécurisée, soit pour communiquer plusieurs informations successivement sans avoir à mettre en oeuvre un dispositif de synchronisation de la tête de lecture du capteur de luminescence situé sur tout ou partie de l'échantillon esclave. Le capteur de luminescence unique peut être remplacé par deux ou plusieurs capteurs de luminescence situés sur tout ou partie de l'échantillon esclave. Des combinaisons des techniques de stimulation et de mesure décrites ci-dessus peuvent être mises en oeuvre sans sortir du cadre de l'invention. Un échantillon ou une « petite surface» dudit échantillon telle qu'employée ci-dessus, peut comporter de quelques pièges à un très grand nombre, selon l'optimisation de la méthode utilisée et des technologies de stimulation et de mesures employées. Le nombre de pièges nécessaires à la transmission et à la réception d'une information tient compte du fading, du fading inverse, et de la sensibilité et précision des appareillages d'irradiation ou d'illumination et de détection de la luminescence.

Les pièges de certains matériaux photoluminescents ou thermoluminescents complexes **peuvent** se vider par conversion interne et ne pas émettre de luminescence durant la stimulation. Dans ce cas, le signal se manifeste par un changement de l'intensité du fading.

Les échantillons bombardés, irradiés ou illuminés peuvent être transportés sur de grandes distances et, en particulier dans le cas de la thermoluminescence, attendre de longues périodes en étant toujours susceptibles d'être stimulés. Dans un mode particulier de l'invention, au moins un échantillon intriqué peut être conservé à une très basse température comprise entre -273°C et 20°C afin de minimiser le fading, ce qui prolonge la durée d'utilisation de l'échantillon. Les piéges ont une demi-vie qui peut s'étendre d'une nanoseconde à 4,6 milliards d'années.

Selon la théorie de la Mécanique Quantique il n'y a pas de procédé connu d'interférence entre un maître et un esclave. Le ou les esclaves sont les seuls à pouvoir recevoir les signaux du ou des maîtres, ce qui permet des applications de communications d'éléments de clés de cryptographie, ou de codes d'activation.

Le procédé, objet de l'invention, est décrit ci-dessus dans son principe sur deux échantillons de matériaux photoluminescents ou thermoluminescents, le « maître » et l'« esclave », préparés selon les méthodes décrites pour la phase de bombardement, d'irradiation ou d'illumination, et exploités selon les techniques de stimulations et de mesures de la luminescence décrites.

Le procédé objet de l'invention peut aussi être appliqué à plus de deux échantillons préparés selon les méthodes décrites pour la phase de bombardement, d'irradiation ou d'illumination, sans sortir du cadre de l'invention : selon la méthode employée, les échantillons présentent des liaisons quantiques entre eux ou entre sous-ensembles de ces échantillons. Par exemples :

- si des échantillons sont présentés sous un faisceau commun, ils comportent alors des liaisons quantiques statistiquement réparties de telle sorte que chaque échantillon peut communiquer avec tous les autres, chaque échantillon ayant la capacité d'être maître ou esclave.
- si K échantillons $E1_k$ (k compris entre 1 et K) sont présentés sous un faisceau intriqué F1, et M échantillons $E2_m$ (m compris entre 1 et M) sont présentés sous l'autre faisceau intriqué F2, les échantillons $E1_k$ ont chacun des liaisons quantiques statistiquement réparties avec les échantillons $E2_m$ de telle sorte que chaque échantillon $E1_k$ peut communiquer avec chaque échantillon $E2_m$ et que chaque échantillon $E2_m$ peut communiquer avec chaque échantillon $E1_k$. Par contre les échantillons $E1_k$ ne peuvent pas communiquer entre eux et les échantillons $E2_m$ ne peuvent pas communiquer entre eux. Ces propriétés peuvent être exploitées pour des communications « point à multi-points » ou « multi-points à multi-points », ad hoc et inviolables.

La généralisation à l'emploi de N faisceaux intriqués (N valant de 1 à 999), par exemple obtenu au moyen de divisions successives de faisceaux par plusieurs cristaux de BBO, ne sort pas du cadre de l'invention. De même l'emploi d'une stimulation modulée en amplitude et / ou en fréquence d'un ou plusieurs échantillons maîtres pour communiquer une variation de luminescence partiellement corrélée à un ou plusieurs échantillons esclaves ne sort pas du cadre de l'invention. Enfin la démultiplication du procédé sur deux ou plusieurs groupes d'échantillons intriqués disposés sur un ou plusieurs supports, exploités simultanément ou successivement, au moyen d'un ou plusieurs exemplaires des appareillages objets de l'invention, ne sort pas non plus du cadre de l'invention.

Les groupes d'échantillons maîtres ou esclaves sont généralement des solides constitués par des cristaux naturels ou artificiels de matériaux photoluminescents ou thermoluminescents fixés sur un support ou incorporés dans, ou entre, d'autres matériaux. Ces cristaux peuvent aussi être utilisés sous différentes formes chimiques ou physiques, par exemple sous une forme pulvérulente.

Un groupe d'échantillons intriqués peut comporter des échantillons sous des formes physiques et / ou chimiques différentes. Un groupe d'échantillons intriqués peut également comporter des échantillons dont l'un au moins a subi une transformation physique et / ou chimique après bombardement, irradiation ou illumination. Les matériaux photoluminescents ou thermoluminescents sont, par exemple, choisis parmi ceux listés dans les tableaux 1 et 2. D'autres cristaux photoluminescents ou thermoluminescents naturels ou artificiels peuvent être utilisés sans sortir du cadre de l'invention.

Les échantillons d'un même groupe peuvent être de natures différentes, par exemple l'un en poudre et l'autre en film. Un mélange de plusieurs matériaux photoluminescents ou thermoluminescents de natures différentes peut également être utilisé. L'irradiation des échantillons peut être faite avec tout type de générateur de particules intriquée ad hoc et la détection de la luminescence corrélée du ou des échantillons « esclave » peut être mesurée avec tout type de détecteur approprié. La stimulation de l'échantillon « maître » peut être réalisée par tout type de source lumineuse infrarouge, visible, ultraviolette ou calorifique adaptée.

Il est également possible que les progrès de la technique permettent l'utilisation d'instruments plus perfectionnés que ceux connus présentement et d'améliorer les performances mentionnées dans cette invention sans sortir du cadre de l'invention. Une modulation en amplitude des stimulations peut être utilisée pour envoyer un message. Des modulations plus complexes telles que modulation en amplitude et /ou en fréquence des stimulations peuvent également être utilisées.

On peut stimuler un ou des matériaux particuliers, dans le cas où un mélange de matériaux est utilisé, par l'une des techniques de stimulation suivantes :

- le chauffage qui met en oeuvre des vibrations du réseau cristallin sous forme de phonons d'énergie (k T), k étant la constante de Boltzmann et T la température absolue. Cette technique est macroscopique. La figure 1 et les tableaux 1 et 2 montrent par exemple que les matériaux listés présentent des réponses en température différentes avec émission de photons de longueurs d'ondes différentes pour chaque matériau photoluminescent ou thermoluminescent. En conséquence, l'échantillon maître contenant un mélange de matériaux photoluminescents ou thermoluminescents peut être stimulé selon une courbe de variation de la température en fonction du temps : le ou les échantillons esclaves contenant le même mélange de matériaux photoluminescents ou thermoluminescents, ou un autre mélange dans des proportions connues, présentent alors un spectre d'émissions de photons en longueurs d'ondes et en amplitude variant dans le temps, qui permet d'améliorer le rapport signal sur bruit de la transmission.

- le rayonnement optimisé, par exemple fourni par un laser de lumière infrarouge, ou éventuellement visible ou ultraviolette, qui émet des photons d'énergie (h v), h étant la constante de Planck et v la fréquence du photon. Le rayonnement est optimisé en fréquence, en intensité et en durée pour chacun des matériaux photoluminescents ou thermoluminescents. La réponse spectrale du matériau ou du mélange de matériaux utilisés est caractéristique. Le ou les échantillons esclaves contenant le même mélange de matériaux photoluminescents ou thermoluminescents que l'échantillon maître, ou un autre mélange dans des proportions connues, présentent alors un spectre d'émissions de photons en longueurs d'ondes et en amplitudes dans le temps, qui permet d'améliorer le rapport signal sur bruit de la transmission. Dans un mode particulier de la technique de rayonnement optimisé, au moins un échantillon peut être maintenu à une basse température (comprise entre -273°C et 20°C) afin d'éliminer l'effet secondaire des phonons dus à la chaleur, et ainsi obtenir un spectre d'émissions de photons dont les raies caractéristiques sont mieux définies. La technique de rayonnement optimisé peut être exploitée jusqu'à un niveau microscopique, et en particulier en nanotechnologie, soit au niveau des échantillons intriqués, soit au niveau des petites surfaces illuminées dans lesdits échantillons intriqués. La récurrence des phases de stimulation / mesure peut être beaucoup plus élevée dans ces techniques permettant d'atteindre un grand débit d'informations émises et reçues.

< L'invention a pour objet un système d'échantillons pour communiquer ou commander à distance une variation de luminescence selon les revendications 1 à 4, un procédé de fabrication d'un système d'échantillons pour communiquer ou commander à distance une variation de luminescence selon les revendications 5 à 9 et un procédé de transmission pour communiquer ou commander à distance une variation de luminescence selon les revendications 10 à 27. >

### Description sommaire des dessins :

La figure 1 représente la réponse de luminescence lors du chauffage de deux échantillons thermoluminescents.

La figure 2 représente schématiquement l'irradiation de deux échantillons d'un matériau photoluminescent ou thermoluminescent avec des rayons intriqués gamma ou X intriqués ou ultraviolets ou visibles.

La figure 3 représente schématiquement le principe de la liaison quantique entre l'échantillon stimulé, le « maître », à gauche et l'échantillon récepteur, l'« esclave », à droite.

La figure 4 illustre un mode de réalisation de l'invention dans lequel une pluralité d'échantillons placés sur deux films peuvent être irradiés en séquence et en correspondance par un générateur de photons intriqués gamma, X ou ultraviolets ou visibles.

La figure 5 illustre l'utilisation des films pour communiquer. Sur la gauche de la figure, des signaux sont émis par modulation en amplitude ou en phase de la stimulation de l'échantillon maître. Sur la droite le signal en provenance de l'échantillon esclave correspondant est détecté par un photomultiplicateur ou une photodiode.

La figure 6 représente les films développés tel qu'ils se présentent devant les systèmes de stimulation et de détection.

La figure 7 représente schématiquement deux appareillages : l'un à gauche est utilisé en émetteur et l'autre à droite est utilisé en récepteur. Les fonctionnalités peuvent être inversées, permettant des communications en semi-duplex.

La figure 8 représente schématiquement deux appareillages : l'un à gauche est utilisé en émetteur sur l'un des échantillons et l'autre à droite est utilisé en récepteur sur la totalité des échantillons. Cette fonctionnalité permet des communications simples sans synchronisation des disques porteurs des groupes d'échantillons intriqués.

Le tableau 1 énumère les principaux matériaux photoluminescents disponibles présentement avec leurs caractéristiques. De très nombreux matériaux artificiels existent avec différents atomes de dopage ou combinaisons d'atomes de dopage ou des dislocations.

Le tableau 2 énumère les principaux matériaux thermoluminescents disponibles présentement avec leurs caractéristiques. De très nombreux matériaux artificiels existent avec différents atomes de dopage ou combinaisons d'atomes de dopage ou des dislocations. Les données de ce tableau sont approximatives car parfois différentes selon les auteurs et la nature des échantillons.

## Manières de réaliser l'invention :

Des manières de réaliser l'invention sont décrites ci-dessous. Cependant il est précisé que la présente invention peut être réalisée de différentes façons. Ainsi, les détails spécifiques mentionnés ci-dessous ne doivent pas être compris comme limitant la réalisation, mais plutôt comme une base descriptive pour supporter les revendications et pour apprendre à l'homme de l'art l'usage de l'invention présente, dans pratiquement la totalité des systèmes, structures ou manières, détaillés et appropriés.

Selon un mode particulier de l'invention, deux échantillons de matériaux thermoluminescents ou photoluminescents, par exemple d'oxyde d'aluminium dopé au carbone sont bombardés, irradiés ou illuminés par des particules intriqués, par exemple par des photons gamma intriqués d'un accélérateur linéaire de type CLINAC (Compact Linear Accelerator) pendant un temps suffisant pour atteindre une dose près de la saturation soit approximativement 10 Gray ($Jkg^{-1}$), généralement en quelques minutes. Ces échantillons sont alors maintenus dans l'obscurité de façon à ne pas augmenter le « fading ». La figure 2 représente schématiquement l'irradiation des deux échantillons (6) et (7) par les rayons ionisants intriqués (4) et (5) dans la chambre obscure (8). La source (3) peut être de type CLINAC, par exemple. Dans le cas de la photoluminescence, les rayons intriqués (4) et (5) peuvent être des rayons ultraviolets ou visibles.

La figure 3 représente schématiquement l'expérience de communication à distance. Une séparation symbolique (12) représente tout milieu et distance entre l'émetteur à gauche et le récepteur à droite. L'échantillon intriqué (6), le « maître » est placé dans la chambre obscure (9) de l'émetteur. Une lampe ou un laser de lumière infrarouge, ou éventuellement visible ou ultraviolette (10), illumine avec les rayons (11) et chauffe l'échantillon (6). Le chauffage peut également avoir lieu avec une résistance en particulier dans le cas d'échantillons thermoluminescents. Le système récepteur comporte également une chambre obscure (15). Il comprend l'échantillon intriqué (7), l'« esclave », dont les rayons lumineux (14) illuminent un détecteur de luminescence (13), par exemple un photomultiplicateur ou une photodiode. Un système non représenté enregistre la luminescence en fonction de la température ou du temps. La réalisation de l'invention est plus complexe pour permettre la transmission et la réception d'une succession de signaux comme indiqué dans la suite.

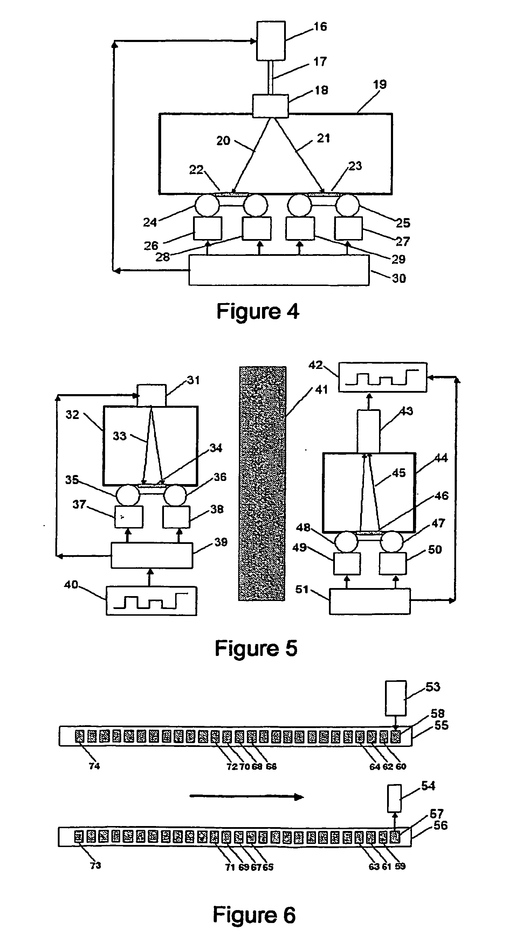

Selon un autre mode particulier de l'invention, le bombardement, l'irradiation ou l'illumination est représentée sur la figure 4. Les échantillons se présentent, par exemple, sous la forme de films de téflon qui contiennent le matériau thermoluminescent ou photoluminescent. Sur cette figure, un accélérateur de particules (16) envoie sur une cible (18) des particules accélérées (17), par exemple des électrons. Dans la chambre obscure (19), les rayons gamma, X, ultraviolets ou visibles intriqués (20) et (21) sont envoyés sur les films thermoluminescents ou photoluminescents (22) et (23) pour l'irradiation de surfaces de formes quelconques, carrés, cercles, ou rectangles dénommées dans la suite par « cadre ». Ces cadres vont défiler de façon synchrone un par un et s'arrêter le temps de l'irradiation nécessaire pour envoyer et recevoir les messages. Les films sont enroulés dans des containers (24) et (25). Le déroulement des films pour l'irradiation de chaque cadre est assuré par des mécanismes (26) et (29). Le rembobinage peut se faire grâce à des mécanismes (28) et (27). Ces mécanismes sont commandés par une minuterie (30). Cette minuterie commande également l'accélérateur de particules (16). Un grand nombre d'irradiations corrélées peuvent être faites en séquence avec chaque container. L'un des containers contient le film « maître », l'autre contient le film « esclave ». Lesdits containers sont obscurs comme des containers de pellicule de photographie.

Selon le même mode de réalisation de l'invention, la figure 5 représente la stimulation à distance du film esclave. Une séparation symbolique (41) représente tout milieu et distance entre l'émetteur à gauche et le récepteur à droite. La partie gauche de la figure représente les appareils permettant de stimuler les échantillons maître (34) préalablement irradiés en même temps que les esclaves pour transmettre des messages. Ces échantillons provenant du film contenu dans les containers (35) et (36), sont exposés dans la chambre obscure (32) aux rayons de lumière infrarouge, ou éventuellement visible ou ultraviolette (33), provenant de la source de lumière (31), par exemple d'un laser. Des mécanismes (37) et (38) assurent le déroulement du film thermoluminescent ou photoluminescent. Une minuterie (39) règle le fonctionnement des mécanismes de déroulement du film cadre par cadre et de l'éclairage de la source (31). Les signaux à transmettre sont fournis par le générateur (40) qui commande la modulation de l'intensité en amplitude et en durée de la stimulation pour chaque cadre.

La partie droite de la figure 5 représente le récepteur de signaux. Un détecteur de luminescence, par exemple un photomultiplicateur ou une photodiode (43) est placé dans la paroi d'une chambre obscure (44). Il reçoit les rayons lumineux de luminescence (45) émis par le cadre (46) du film thermoluminescent ou photoluminescent. Ce film est contenu dans les containers (47) et (48), eux mêmes actionnés par les mécanismes (49) et (50). La minuterie (51) commande les mécanismes et l'enregistreur (42). Aucune communication n'est requise pour la synchronisation de l'émission et de la réception, car le récepteur est mis en veille sur le premier cadre. Lorsqu'un signal apparaît la séquence de présentation des cadres récepteurs se déclanche à une cadence convenue identique à celle du système émetteur.

Dans un autre mode de réalisation les films peuvent défiler simultanément de façon continue pour l'exposition aux rayons intriqués comme illustré sur la figure 4. Pour effectuer une télécommunication entre film maître et esclave comme indiqué sur la figure 5, l'esclave reste en veille sur le début du film esclave. Lorsqu'un signal apparaît le déroulement du film esclave se fait à une vitesse identique à celle du déroulement du film maître. Il est également possible de coder l'arrêt du film esclave et son redémarrage. Bien entendu, durant toutes ces mesures, il est tenu compte de la très faible décroissance naturelle de la luminescence des substances thermoluminescentes ou photoluminescentes utilisées.

Les appareillages décrits précédemment sont des exemples de réalisation. D'autres moyens pour présenter les échantillons ou les films à l'irradiation et à la détection peuvent être employés sans sortir du cadre de l'invention. En particulier, l'utilisation de deux faisceaux séparés de particules intriquées, telles que des photons intriqués gamma, X, ultraviolets ou visibles, pour le bombardement, l'irradiation ou l'illumination est possible sans sortir du cadre de l'invention.

Un exemple de film est illustré sur la figure 6. Sur le film (55), le « maître », de petites surfaces (58), (60), .... (74) et sur le film (56), l' « esclave », de petites surfaces (57), (59),.... (75), sont irradiées deux à deux simultanément et indépendamment par des faisceaux séparés de particules intriquées deux à deux. Le maître et l'esclave peuvent alors être séparés par de très grandes distances, à travers n'importe quels milieux et les films exploités comme suit, chacun étant dans une chambre noire: le générateur de photons de lumière infrarouge, ou éventuellement visible ou ultraviolette (53) illumine fortement la petite surface (58), un fort signal est alors reçu par le détecteur de luminescence, par exemple un photomultiplicateur ou une photodiode (54). Un mouvement synchronisé des deux films est alors déclanché. Les surfaces (60), (62), (64),... etc. sont alors illuminées successivement avec différentes intensités et les signaux correspondants sur les surfaces (59), (61), (63),... etc. sont enregistrés. Pour arrêter le mouvement des films, par exemple, deux fortes illuminations irradient en séquence sur les surfaces (66) et (68) du maître. Ces forts signaux détectés par l'esclave en (65) et (67) causent l'arrêt du film esclave. Le redémarrage des films se fait par une forte illumination sur la surface (70) causant un fort signal sur la surface (69) et le redémarrage du film esclave. De nouveaux signaux sont transmis avec la surface (72) et suivantes correspondant à la surface (71) et suivantes. Un fort signal sur la surface (74) est reçu par la surface (73) indiquant la fin du message. Ce mode de réalisation très élémentaire, peut être réalisé de façon plus complexe sans sortir du cadre de l'invention.

Les films peuvent être remplacés par des disques, les petites surfaces étant reparties sur une ou plusieurs circonférences sans sortir du cadre de l'invention. Dans le cas des films comme dans celui des disques, les surfaces peuvent être jointes pour former une longue trace et l'irradiation comme la stimulation et la détection peuvent se faire par déplacement continu des films ou rotation continue des disques à nouveau sans sortir du cadre de l'invention.

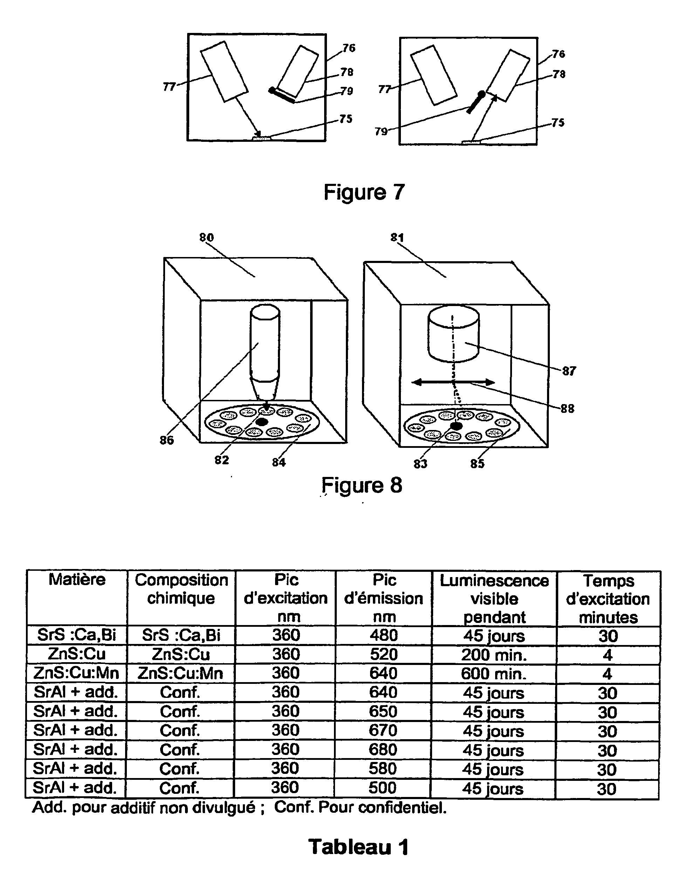

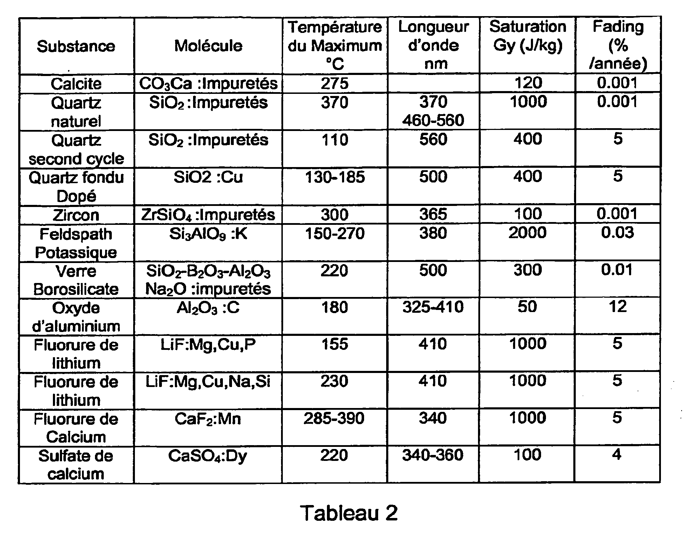

Le générateur de photons de stimulation (53) et le détecteur de luminescence (54) sur la figure 6 peuvent être regroupés dans un même instrument comme le montre la figure 7. Les supports de matériaux thermoluminescents ou photoluminescents préalablement bombardés, irradiés, illuminés, constitués par exemple par des films ou des disques, peuvent alors être utilisés soit en émetteur de signal soit en récepteur. On établit ainsi une communication semi-duplex. Sur la figure 7, le boîtier (76) contient le générateur de photons de lumière infrarouge, ou éventuellement visible ou ultraviolette de stimulation (77) et le détecteur de luminescence (78). Ils sont orientés de façon soit à éclairer la surface (75) pour la stimuler en mode émission à gauche, soit à détecter la luminescence de la surface (75) en mode réception à droite. Cet émetteur-récepteur est normalement mis en veille en mode réception (partie droite de la figure). Il n'est utilisé en mode émission que lorsqu'un message doit être envoyé. En mode émission (partie gauche de la figure), un obturateur (79) protège le détecteur de luminescence.

Lorsqu'un acquittement des informations transmises est requis, deux systèmes tels que celui décrit sur la figure 5 sont utilisés. Par exemple, Alice et Bob possèdent chacun deux films ou disques intriqués deux à deux chacun muni d'un générateur de photons de lumière infrarouge, ou éventuellement visible ou ultraviolette et d'un détecteur de luminescence, par exemple un photomultiplicateur ou une photodiode. La télécommunication entre Alice et Bob peut alors s'effectuer en duplex.

La figure 8 montre schématiquement un autre mode d'exploitation de deux supports, par exemple des disques, comportant des échantillons intriqués deux à deux. Le disque maître (84) est placé dans la chambre obscure (80). L'échantillon (82), par exemple, est stimulé, par exemple, par le laser de lumière infrarouge, ou éventuellement visible ou ultraviolette (86). Dans la chambre obscure (81) l'échantillon intriqué correspondant (83) du support esclave (85) produit une variation partiellement corrélée de luminescence qui est mesurée à travers un dispositif convergent, par exemple une lentille (88) par le détecteur de luminescence (87). Celui-ci peut recevoir la luminescence de n'importe quel échantillon du support (85). En conséquence, aucune synchronisation entre les deux supports (84) et (85) n'est requise dans cette mise en oeuvre de l'invention pour transmettre et recevoir un message. Les éléments (87) et (88) peuvent être remplacés par un dispositif de caméra numérique de plusieurs millions de pixels permettant d'exploiter l'information associée à la localisation de l'échantillon esclave.

**Possibilités d'applications industrielles :**

Différentes applications industrielles sont immédiatement envisageables, signaux de secours dans les mines, les fonds marins, sur des distances interplanétaires, etc.
Des dispositifs selon l'invention, y compris des kits commerciaux de démonstration du procédé, peuvent être constitués de tout ou partie des appareillages suivants :

- appareillages de bombardement, d'irradiation ou d'illumination de particules intriquées tels que décrits ci-dessus,
- appareillages de stimulation tels que décrits ci-dessus,
- appareillages de détection de luminescence tels que décrits ci-dessus.

Certains de ces appareillages, en ce qu'ils sont destinés à appliquer le procédé objet de l'invention, peuvent être conçus, fabriqué ou assemblé par une même entreprise ou des entreprises différentes, ou en un même lieu ou en des lieux différents, sans sortir du cadre de la protection recherchée par ce brevet d'invention dans la mesure où ledit appareillage est conçu, fabriqué ou assemblé sur le lieu de couverture de ce brevet, y compris les aéronefs, les vaisseaux marins, sous-marins et spatiaux, et les sondes terrestres, marines et spatiales.
Certains de ces appareillages, en ce qu'ils sont destinés à appliquer le procédé objet de l'invention, peuvent être exploités par une même entreprise ou des entreprises différentes, ou en un même lieu ou en des lieux différents, sans sortir du cadre de la protection recherchée par ce brevet d'invention, dans la mesure où au moins l'un de ces appareillages est exploité sur le lieu de couverture de ce brevet, y compris les aéronefs, les vaisseaux marins, sous-marins et spatiaux, et les sondes terrestres, marines et spatiales.
Avec des matériaux thermoluminescents ou photoluminescents de longue durée de vie, des communications simples, en unidirectionnel, en semi-duplex ou en duplex peuvent être établies. Ces communications ne peuvent être détectées que par le ou les échantillons récepteurs. Elles sont donc rigoureusement secrètes. Elles sont également pratiquement instantanées et peuvent être mises en oeuvre à travers tous milieux et à toutes distances.

**Références**

[1] Einstein A., Podolsky B., Rosen N., « Can Quantum-Mechanical Description of Physical Reality Be Considered Complete? », Phys. Rev. 47, 777, (1935)
[2] Bell J. S., «Speakable and Unspeakable in Quantum Mechanics», New York, Cambridge University Press, 1993.
[3] Aspect A., « Trois tests expérimentaux des inégalités de Bell par mesure de corrélation de polarisation de photons», Doctoral Dissertation, Université Paris-Orsay, 1er Février 1983.
[4] Townsend P. D., Rarity J. G., Tapster P. R., «Single-Photon Interference in 10 km Long Optical-Fiber», Electronics Letters, V 29, p. 634, 1993.
[5] Duncan A. J., and Kleinpoppen H., « Quantum Mechanics versus Local Realism», (F. Selleri, ed.), Plenum, New York, 1988.
[6] Richardson B. Coburn, and T. G. Chasteen T. G., «Experience the Extraordinary Chemistry of Ordinary Things», John Wiley and Sons: New York, 2003, 343 pages.
[7] Weber M. J. and Tompson B. J. « Selected Papers on Photoluminescence of Inorganic Solids», SPIE Milestone Series, V. Ms 150, Aug 1998.
[8] Pelton M. et al., «Triggered single photons and entangled photons from a quantum dot microcavity», Eur. Phys. J., D 18, 179-190 (2002).
[9] Johnson B. D., «Infrared Diode Laser Excites Visible Fluorophores», Photonics, Dec. 2001.
[10] Compton K. «Image Performance in CRT Displays» (Tutorial Texts in Optical Engineering, Vol. TT54), SPIE, Jan. 2003.

[11] Sergienko A. V., and Jeager G. S., «Quantum information processing and precise optical measurement with entangled-photon pairs», Contemporary Physics, V. 44, No. 4, July-Aug. 2003, 341-356.

[12] Greenberger D.M., Home M.A., and Zeilinger A., « Multiparticle Interferometry and the Superposition Principle », Physics Today 46 8 (1993).

[13] Blinov B. B., et al, «Observation of entanglement between a single trapped atom and a single photon». Nature, 428, 153-157, (11 March 2004).

[14] Julsgaard B., Kozhekin A., and Polzik E; S., «Experimental long-lived entanglement of two macroscopic objects», Nature, 413, 400-403,(2001).

[15] Justus B. L. et al., «Dosimetry measurements», CRC Press LLC,(2000).

[16] Shani G., « Radiation Dosimetry: Instrumentation and Methods», CRC Press (January 2001).

[17] Botter-Jensen L., McKeever S; W; S., and Wintle A; G., « Optically Stimulated Luminescence Dosimetry », Elsevier, Amsterdam, NL, (2003).

[18] McKeever S. W. S., « Thermoluminescence of solids », Cambridge University Press, 1985.

[19] Furetta C., « Handbook of Thermoluminescence », World Scientific Publishing Company (March 1, 2003).

[20] Greenberger D., et al,. « Bell's Theorem Without Inequalities», Amer. J. of Phys., 58, (12), Dec. 1990.

[21] Smith A., V., « How to select non linear crystal and model their performance using SNLO software », SLNO software from Sandia National Laboratory. (http://www.sandia.gov/imrl/XWEB1128/snloftp.htm)

Tableaux :

**Tableau 1**

| Matière | Composition chimique | Pic d'excitation nm | Pic d'émission nm | Luminescence visible pendant | Temps d'excitation minutes |
|---|---|---|---|---|---|
| SrS :Ca,Bi | SrS :Ca,Bi | 360 | 480 | 45 jours | 30 |
| ZnS:Cu | ZnS:Cu | 360 | 520 | 200 min. | 4 |
| ZnS:Cu:Mn | ZnS:Cu:Mn | 360 | 640 | 600 min. | 4 |
| SrAl + add. | Conf. | 360 | 640 | 45 jours | 30 |
| SrAl + add. | Conf. | 360 | 650 | 45 jours | 30 |
| SrAl + add. | Conf. | 360 | 670 | 45 jours | 30 |
| SrAl + add. | Conf. | 360 | 680 | 45 jours | 30 |
| SrAl + add. | Conf. | 360 | 580 | 45 jours | 30 |
| SrAl + add. | Conf. | 360 | 500 | 45 jours | 30 |
| Add. pour additif non divulgué ; Conf. Pour confidentiel. | | | | | |

**Tableau 2**

| Substance | Molécule | Température du Maximum °C | Longueur d'onde nm | Saturation Gy (J/kg) | Fading (% / année) |
|---|---|---|---|---|---|
| Calcite | $CO_3Ca$ : Impuretés | 275 | | 120 | 0.001 |
| Quartz naturel | $SiO_2$:Impuretés | 370 | 370 460-560 | 1000 | 0.001 |
| Quartz second cycle | $SiO_2$ :Impuretés | 110 | 560 | 400 | 5 |
| Quartz fondu Dopé | SiO2 :Cu | 130-185 | 500 | 400 | 5 |

(suite)

| Substance | Molécule | Température du Maximum °C | Longueur d'onde nm | Saturation Gy (J/kg) | Fading (% / année) |
|---|---|---|---|---|---|
| Zircon | ZrSiO4: Impuretés | 300 | 365 | 100 | 0.001 |
| Feldspath Potassique | $Si_3AlO_9$ :K | 150-270 | 380 | 2000 | 0.03 |
| Verre Borosilicate | $SiO_2$-$B_2O_3$-$Al_2O_3$ $Na_2O$ :impuretés | 220 | 500 | 300 | 0.01 |
| Oxyde d'aluminium | $Al_2O_3$ :C | 180 | 325-410 | 50 | 12 |
| Fluorure de lithium | LiF:Mg,Cu,P | 155 | 410 | 1000 | 5 |
| Fluorure de lithium | LiF:Mg,Cu,Na,Si | 230 | 410 | 1000 | 5 |
| Fluorure de Calcium | $CaF_2$:Mn | 285-390 | 340 | 1000 | 5 |
| Sulfate de calcium | $CaSO_4$:Dy | 220 | 340-360 | 100 | 4 |

## Revendications

1. Système d'échantillons pour communiquer ou commander à distance une variation de luminescence, dans lequel lesdits échantillons contiennent chacun au moins un matériau photoluminescent ou thermoluminescent ayant au moins un état excité, ledit système d'échantillons comportant des groupes de deux ou plusieurs électrons contenus dans des pièges desdits matériaux photoluminescents ou thermoluminescents excités, lesdits électrons desdits groupes étant intriqués entre eux et étant distribués dans lesdits matériaux des échantillons dudit système d'échantillons tels que certaines liaisons quantiques obtenues soient réparties sur plusieurs échantillons, lesdits échantillons étant appelés les échantillons intriqués, lesdits échantillons intriqués formant un système d'échantillons qui peuvent être séparés dans l'espace tout en conservant des liaisons quantiques distantes entre certains desdits électrons piégés dans lesdits matériaux photoluminescents ou thermoluminescents desdits échantillons intriqués séparés.

2. Système d'échantillons selon la revendication 1 dans lequel ledit matériau photoluminescent ou thermoluminescent est choisi parmi des matériaux artificiels, ou parmi des matériaux naturels contenant des impuretés ou des dislocations, ou parmi des répliques de matériaux naturels contenant des impuretés ou des dislocations.

3. Système d'échantillons selon l'une quelconque des revendications 1 ou 2 dans lequel lesdits matériaux contenus dans lesdits échantillons sont thermoluminescents.

4. Système d'échantillons selon l'une quelconque des revendications 1 ou 2 dans lequel lesdits matériaux contenus dans lesdits échantillons sont photoluminescents.

5. Procédé de fabrication d'un système d'échantillons pour communiquer ou commander à distance une variation de luminescence, dans lequel deux ou plusieurs échantillons contenant chacun au moins un matériau photoluminescent ou thermoluminescent sont préparés simultanément par bombardement, irradiation ou illumination desdits matériaux au moyen d'au moins une source émettant directement ou indirectement des groupes de particules intriquées, tels que certaines liaisons quantiques obtenues soient réparties sur plusieurs échantillons, lesdits échantillons une fois bombardés, irradiés ou illuminés étant séparés pour former un système d'échantillons intriqués.

6. Procédé de fabrication selon la revendication 5 dans lequel lesdites particules intriquées comprennent des photons intriqués gamma, X, ultraviolets ou visibles par exemple émis soit par un matériau radioactif naturel ou artificiel composé d'atomes émettant plusieurs photons en cascade, soit par une cible bombardée par des particules accélérées qui émet des groupes de photons par effet Bremsstrahlung, soit par un matériau composé d'atomes émettant en cascade par ionisation des groupes de photons intriqués, soit par un générateur de groupes de photons intriqués émettant ces groupes de photons répartis dans au moins deux faisceaux séparés et partiellement ou presque totalement intriqués, soit par une combinaison de ces procédés.

7.  Procédé de fabrication selon la revendication 5 dans lequel lesdites particules intriquées comprennent des électrons intriqués, des positrons intriqués, des protons intriqués, des atomes intriqués, des molécules intriqués, des micelles intriquées, ou encore des combinaisons ou des ensembles de ces particules.

8.  Procédé de fabrication selon l'une quelconque des revendications 5 à 7 dans lequel lesdits matériaux contenus dans lesdits échantillons sont thermoluminescents.

9.  Procédé de fabrication selon l'une quelconque des revendications 5 à 7 dans lequel lesdits matériaux contenus dans lesdits échantillons sont photoluminescents.

10. Procédé de transmission pour communiquer ou commander à distance un système d'échantillons contenant chacun au moins un matériau photoluminescent ou thermoluminescent ayant au moins un état excité et comportant des groupes de deux ou plusieurs électrons contenus dans des pièges desdits matériaux photoluminescents ou thermoluminescents excités, lesdits électrons étant intriqués entre eux et étant distribués dans lesdits matériaux des échantillons dudit système d'échantillons, tels que certaines liaisons quantiques entre lesdits électrons piégés soient réparties sur plusieurs échantillons, appelés par la suite les échantillons intriqués, et formant un système d'échantillons intriqués, est utilisé pour les étapes suivantes :

    - émission d'au moins une information ou au moins un signal de commande en provoquant au moins une stimulation modulée en amplitude et / ou en fréquence sur au moins un desdits échantillons intriqués, appelé l'échantillon intriqué maître,
    - détermination de la réception d'au moins une information ou d'au moins un signal de commande à distance en mesurant au moins une variation de luminescence partiellement corrélée sur au moins un autre desdits échantillons intriqués, appelé l'échantillon intriqué esclave, lors de la stimulation modulée en amplitude et / ou en fréquence du susdit échantillon intriqué maître, pratiquement instantanément, indépendamment des distances séparant les échantillons intriqués et des milieux séparant ces échantillons intriqués ou dans lesquels ils sont placés.

11. Procédé de transmission selon la revendication 10 dans lequel au moins une susdite stimulation modulée en amplitude et / ou en fréquence sur au moins un susdit échantillon intriqué maître, est provoquée soit par chauffage dans sa totalité, soit par chauffage en au moins un point de sa surface, soit par stimulation optique utilisant au moins un flash de lumière infrarouge, visible, ou ultraviolette sur sa totalité, soit par stimulation optique utilisant au moins un flash de lumière infrarouge, visible ou ultraviolette en au moins un point de sa surface, soit par une combinaison de ces procédés.

12. Procédé de transmission selon l'une quelconque des revendications 10 ou 11 dans lequel au moins un susdit échantillon intriqué maître et au moins un susdit échantillon intriqué esclave contiennent au moins deux sortes de matériaux photoluminescents ou thermoluminescents excités dont la variation de luminescence partiellement corrélée de deux ou plusieurs d'entre d'eux est mesurée simultanément sur tout ou partie d'au moins un susdit échantillon intriqué esclave.

13. Procédé de transmission selon l'une quelconque des revendications 10 à 12 dans lequel au moins un susdit échantillon intriqué contient au moins une sorte de matériaux photoluminescents ou thermoluminescents excités dont la luminescence comporte une pluralité de raies optiques dont au moins une est mesurée sur au moins un susdit échantillon esclave.

14. Procédé de transmission selon l'une quelconque des revendications 10 à 13 dans lequel ladite stimulation modulée en amplitude et / ou en fréquence est une stimulation par chauffage d'au moins un susdit échantillon intriqué maître modulée dans le temps et optimisée pour au moins un matériau photoluminescent ou thermoluminescent, et en ce que la variation de luminescence partiellement corrélée d'au moins un susdit échantillon intriqué esclave est mesurée dans le temps pour améliorer le rapport signal sur bruit de la transmission.

15. Procédé de transmission selon l'une quelconque des revendications 10 à 14 dans lequel ladite stimulation modulée en amplitude et / ou en fréquence est une stimulation par rayonnement infrarouge, visible, ou ultraviolet d'au moins un susdit échantillon intriqué maître optimisée en énergie des photons pour au moins un matériau photoluminescent ou thermoluminescent et dans lequel ladite variation de luminescence partiellement corrélée d'au moins un susdit échantillon intriqué esclave est mesurée dans sa réponse spectrale pour améliorer le rapport signal sur bruit de la transmission et de la réception.

16. Procédé de transmission selon l'une quelconque des revendications 10 à 15 dans lequel au moins un susdit échantillon intriqué esclave est exploité à basse température comprise entre -273°C et 20°C afin d'éliminer l'effet secondaire des phonons dus à la chaleur, et ainsi obtenir un spectre d'émissions de photons dont les raies caractéristiques sont mieux définies.

17. Procédé de transmission selon l'une quelconque des revendications 10 à 16 dans lequel au moins un susdit échantillon intriqué est conservé à une basse température comprise entre -273°C et 20°C afin de minimiser le fading, ce qui prolonge la durée d'utilisation dudit échantillon intriqué.

18. Procédé de transmission selon l'une quelconque des revendications 10 à 17 dans lequel au moins deux supports ad hoc comportent une pluralité de susdits systèmes d'échantillons intriqués et dans lequel au moins une susdite variation de luminescence partiellement corrélée est mesurée sur au moins un susdit échantillon intriqué esclave, à l'aide d'un dispositif de caméra optique et numérique permettant de localiser ledit échantillon esclave sur son susdit support et d'identifier ainsi au moins un susdit échantillon intriqué maître correspondant ayant été stimulé, donc appartenant au même système d'échantillons intriqués, sur au moins un des autres supports, en permettant la transmission et la réception d'informations ou de commandes à distance.

19. Procédé de transmission selon l'une quelconque des revendications 10 à 18 dans lequel ledit système d'échantillons intriqués a été préparé simultanément à partir de deux ou plusieurs échantillons contenant chacun au moins un matériau photoluminescent ou thermoluminescent ayant au moins un état excité obtenu par bombardement, irradiation ou illumination au moyen d'au moins une source émettant directement ou indirectement des groupes de particules intriquées, tels que certaines liaisons quantiques obtenues soient réparties sur plusieurs échantillons, lesdits échantillons une fois bombardés, irradiés ou illuminés étant séparés pour former ledit système d'échantillons intriqués.

20. Procédé de transmission selon la revendication 19 dans lequel lesdites particules intriquées comprennent des photons intriqués gamma, X, ultraviolets ou visibles par exemple émis soit par un matériau radioactif naturel ou artificiel composé d'atomes émettant plusieurs photons en cascade, soit par une cible bombardée par des particules accélérées qui émet des groupes de photons par effet Bremsstrahlung, soit par un matériau composé d'atomes émettant en cascade par ionisation des groupes de photons intriqués, soit par un générateur de groupes de photons intriqués émettant ces groupes de photons répartis dans au moins deux faisceaux séparés et partiellement ou presque totalement intriqués, soit par une combinaison de ces procédés.

21. Procédé de transmission selon la revendication 19 dans lequel lesdites particules intriquées comprennent soit des électrons intriqués, soit des positrons intriqués, soit des protons intriqués, soit des atomes intriqués, soit des molécules intriqués, soit des micelles intriquées, ou encore des combinaisons ou des ensembles de ces particules.

22. Procédé de transmission selon l'une quelconque des revendications 19 à 21 dans lequel :

   - la préparation par ledit bombardement, ou ladite irradiation ou ladite illumination a été effectuée au moyen de N faisceaux séparés qui sont totalement, ou presque totalement, intriqués N à N,
   - un susdit échantillon intriqué maître a été préalablement préparé au moyen d'un des N faisceaux intriqués, ou bien au moins deux susdits échantillons intriqués maître ont été préalablement préparés ensemble au moyen d'un des N faisceaux intriqués,
   - un susdit échantillon intriqué esclave a été préalablement préparé au moyen d'un autre des N faisceaux intriqués, ou bien au moins deux susdits échantillons intriqués esclave ont été préalablement préparés ensemble au moyen d'un autre des N faisceaux intriqués,

   N valant de 2 à 999.

23. Procédé de transmission selon la revendication 22 dans lequel N vaut 2, lesdits faisceaux étant produits par exemple par un cristal non linéaire.

**24.** Procédé de transmission selon l'une quelconque des revendications 10 à 23 dans lequel lesdits matériaux contenus dans lesdits échantillons sont thermoluminescents.

**25.** Procédé de transmission selon l'une quelconque des revendications 10 à 23 dans lequel lesdits matériaux contenus dans lesdits échantillons sont photoluminescents.

**26.** Dispositif **caractérisé en ce qu'**il est spécialement adapté à une pluralité de mise en oeuvre de l'une quelconque des revendications de procédé 6 à 8 pour la production de supports comportant une pluralité de susdits systèmes d'échantillons intriqués.

**27.** Système de transmission quantique **caractérisé en ce qu'**il est spécialement adapté à la mise en oeuvre de l'une quelconque des revendications de procédé 10 à 25.


**Claims**

**1.** System of samples to communicate or remotely command a variation of luminescence, in which the said samples contain each one at least a photoluminescent or thermoluminescent material having at least an excited state, the aforementioned system of samples comprising of groups of two or several electrons contained in traps of the aforesaid photoluminescent or thermoluminescent materials which are excited, the aforementioned electrons of the aforesaid groups being entangled between themselves and being distributed in the aforementioned materials of the samples of the aforesaid system of samples such that certain quantum connections obtained are distributed on several samples, the aforementioned samples being called the entangled samples, said entangled samples forming a system of samples which can be separated in space while preserving remote quantum connections between certain of the aforesaid trapped electrons in the aforementioned photoluminescent or thermoluminescent materials of the aforesaid entangled samples being separated.

**2.** System of samples according to claim 1 in which the aforementioned photoluminescent or thermoluminescent material is selected among artificial materials, or among natural materials containing impurities or dislocations, or among natural material counterparts containing impurities or dislocations.

**3.** System of samples according to anyone of claims 1 or 2 in which the aforementioned materials contained in the aforementioned samples are thermoluminescent.

**4.** System of samples according to anyone of claims 1 or 2 in which the aforementioned materials contained in the aforementioned samples are photoluminescent.

**5.** Manufacturing process of a system of samples to communicate or remotely command a variation of luminescence, in which two or several samples containing each one at least a photoluminescent or thermoluminescent material are prepared simultaneously by bombardment, irradiation or illumination of the aforesaid materials by means of at least a source emitting directly or indirectly groups of entangled particles, such that some quantum connections obtained, are distributed on several samples, the aforementioned samples, once bombarded, irradiated or illuminated, are then being separated to form a system of entangled samples.

**6.** Manufacturing process according to claim 5 in which the aforementioned entangled particles are comprised of entangled gamma photons, entangled X-ray photons, ultraviolet or visible entangled photons, for example emitted either by a natural or artificial radioactive material composed of atoms emitting several photons in a cascade, or by a target bombarded by accelerated particles which emit groups of photons by Bremsstrahlung effect, or by a material made up of atoms emitting, in a cascade by ionization, groups of entangled photons, or by a generator of groups of entangled photons emitting these groups of photons distributed in at least two separate beams and partially or almost completely entangled, or by a combination of these processes.

**7.** Manufacturing process according to claim 5 in which the aforementioned entangled particles are comprised of entangled electrons, or of entangled positrons, or of entangled protons, or of entangled atoms, or of entangled molecules, or of entangled micelles, or of combinations or ensembles of these particles.

**8.** Manufacturing process according to anyone of claims 5 to 7 in which the aforementioned materials contained in the aforementioned samples are thermoluminescent.

9. Manufacturing process according to anyone of claims 5 to 7 in which the aforementioned materials contained in the aforementioned samples are photoluminescent.

10. Method of transmission to communicate or remotely command a variation of luminescence, in which a system of samples containing each one at least a photoluminescent or thermoluminescent material having at least an excited state and comprising groups of two or several electrons contained in traps of the aforesaid photoluminescent or thermoluminescent materials, which are excited, the aforementioned electrons being entangled between themselves, and being distributed in the aforementioned materials of the samples of the aforesaid system of samples, such that some quantum connections between the aforementioned trapped electrons are distributed on several samples, called thereafter the entangled samples, and forming a system of entangled samples, that is used for the following steps:

   - emission of at least one piece of information or of at least a control signal by causing at least a stimulation modulated in amplitude and/or frequency on at least one of the aforesaid entangled samples, called the master entangled sample,
   - determination of the reception of at least one piece of information or at least a remote control signal by measuring at least a variation of luminescence partially correlated on at least another of the aforesaid entangled samples, called the slave entangled sample, during the stimulation modulated in amplitude and/or frequency of the aforesaid master entangled sample, practically instantaneously, independently of the distances separating the entangled samples and the mediums separating these entangled samples or in which they are placed.

11. Method of transmission according to claim 10 in which at least an aforesaid stimulation modulated in amplitude and/or frequency on at least an aforesaid master entangled sample, is caused either by heating in its totality, or by heating in at least a point of its surface, or by optical stimulation using at least a flash of infra-red, visible, or ultraviolet light on its totality, or by optical stimulation using at least a flash of infrared, visible or ultraviolet light in at least a point of its surface, or by a combination of these processes.

12. Method of transmission according to anyone of claims 10 or 11 in which at least an aforesaid master entangled sample and at least an aforesaid slave entangled sample contain at least two kinds of photoluminescent or thermoluminescent materials, which are excited, of which the partially correlated variation of luminescence of two or several of them, is measured simultaneously on whole or part of at least one aforesaid slave entangled sample.

13. Method of transmission according to anyone of claims 10 to 12 in which at least an aforesaid entangled sample at least contains a kind of photoluminescent or thermoluminescent materials, which is excited, whose luminescence comprises a plurality of optical lines, of which at least one is measured on at least one aforesaid slave sample.

14. Method of transmission according to anyone of claims 10 to 13 in which the aforementioned stimulation, which is modulated in amplitude and/or frequency, is a stimulation by heating of at least one aforesaid master entangled sample, that is modulated in time and optimized for at least a photoluminescent or thermoluminescent material, and in which the partially correlated variation of luminescence of at least one aforesaid slave entangled sample is measured versus time to improve the signal to noise ratio of the transmission.

15. Method of transmission according to anyone of claims 10 to 14 in which the aforementioned stimulation, which is modulated in amplitude and/or frequency, is a stimulation by infra-red, visible, or ultraviolet radiation of at least one aforesaid master entangled sample, optimized in energy of the photons for at least a photoluminescent or thermoluminescent material, and in which the aforementioned partially correlated variation of luminescence of at least one aforesaid slave entangled sample is measured in its spectral response to improve the signal to noise ratio of the transmission and of the reception.

16. Method of transmission according to anyone of claims 10 to 15 in which at least an aforesaid slave entangled sample is exploited at a low temperature comprised between -273°C and 20°C in order to eliminate the side effect of the phonons due to heat, and thus to obtain an emission spectrum of photons whose characteristic lines are better defined.

17. Method of transmission according to anyone of claims 10 to 16 in which at least an aforesaid entangled sample is preserved at a low temperature comprised between -273°C and 20°C in order to minimize fading, which prolongs the utilization period of the aforesaid entangled sample.

18. Method of transmission according to anyone of claims 10 to 17 in which at least two ad hoc supports comprise of a plurality of aforesaid systems of entangled samples, and in which at least an aforesaid partially correlated variation of luminescence is measured on at least an aforesaid slave entangled sample, using a device comprising of an optical and digital camera, making it possible to locate the aforementioned slave sample on its aforesaid support and thus to identify at least one aforesaid master entangled sample in relation, which has been stimulated, therefore pertaining to the same system of entangled samples, on at least one of the other supports, hence allowing the transmission and the reception of information or remote controls.

19. Method of transmission according to anyone of claims 10 to 18 in which the aforementioned system of entangled samples was prepared simultaneously from two or several samples containing each one at least a photoluminescent or thermoluminescent material having at least an excited state obtained by bombardment, irradiation or illumination by means of at least a source emitting directly or indirectly groups of entangled particles, such that some quantum connections which are obtained, are distributed on several samples, the aforementioned samples, once bombarded, irradiated or illuminated, being separated to form the aforementioned system of entangled samples.

20. Method of transmission according to claim 19 in which the aforementioned entangled particles comprised of entangled gamma, entangled X-ray, ultraviolet or visible entangled photons, for example emitted either by a natural or artificial radioactive material composed of atoms emitting several photons in a cascade, or by a target bombarded by accelerated particles which emits groups of photons by Bremsstrahlung effect, or by a material made up of atoms emitting, in a cascade by ionization, groups of entangled photons, or by a generator of groups of entangled photons emitting these groups of photons distributed in at least two separate beams and partially or almost completely entangled, or by a combination of these processes.

21. Method of transmission according to claim 19 in which the aforementioned entangled particles comprised either of entangled electrons, or of entangled positrons, or of entangled protons, or of he entangled atoms, or of entangled molecules, or of entangled micelles, or of combinations or ensembles of these particles.

22. Method of transmission according to anyone of claims 19 to 21 in which:

   - the preparation by the aforementioned bombardment, or the aforementioned irradiation or the aforementioned illumination was carried out by means of N separate beams which are completely, or almost completely, entangled N to N,
   - an aforesaid master entangled sample was prepared beforehand by means of one of the N entangled beams, or at least two aforesaid master entangled samples were prepared beforehand together by means of one of the N entangled beams,
   - an aforesaid slave entangled sample was prepared beforehand by means of another of the N entangled beams, or at least two aforesaid slave entangled samples were prepared beforehand together by means of another one of the N entangled beams,

   N being worth from 2 to 999.

23. Method of transmission according to claim 22 in which N is worth 2, the aforementioned beams being produced for example by a nonlinear crystal.

24. Method of transmission according to anyone of claims 10 to 23 in which the aforementioned materials contained in the aforementioned samples are thermoluminescent.

25. Method of transmission according to anyone of claims 10 to 23 in which the aforementioned materials contained in the aforementioned samples are photoluminescent.

26. Device **characterized in that** it is especially adapted to a plurality of implementation of any of the claims of method 6 to 8 for the production of supports comprising a plurality of aforesaid systems of entangled samples.

27. System of quantum transmission **characterized in that** it is especially adapted to the implementation of anyone of the claims of method 10 to 25.

**Patentansprüche**

1. System von Proben, um eine Lumineszenzvariation auf Distanz zu kommunizieren oder zu bedienen, in denen die sogenannten Proben jede mindestens ein photolumineszentes oder thermolumineszentes Material mit mindestens einem angeregten Zustand enthält, das sogenannte System von den Proben umfasst Gruppen von zwei oder mehreren Elektronen enthalten in den Fallen der sogenannten angeregten photolumineszenten oder thermolumineszenten Materialien, die sogenannten Elektronen der sogenannten Gruppen, seien miteinander verschränkt und seien in den sogenannten Materialien der Proben des sogenannten Systems von Proben verteilt, so dass einige erhaltene Quantenverbindungen auf mehrere Proben verteilt sind, die sogenannten Proben, seien verschränkte Proben genannt, die sogenannten verschränkten Proben ein System von Proben bilden, welche im Raum getrennt werden können, wobei die distanzierten Quantenverbindungen beibehalten werden zwischen einigen der sogenannten aufgefangenen Elektronen in den sogenannten photolumineszenten oder thermolumineszenten Materialien der sogenannten getrennten verschränkten Proben.

2. System von Proben entsprechend Anspruch 1, in dem das sogenannte photolumineszente oder thermolumineszente Material innerhalb künstlicher Materialien ausgewählt wird oder innerhalb natürlicher Materialien, die Unreinheiten oder Verschiebungen enthalten, oder innerhalb von Nachbildungen natürlicher Materialien, die Unreinheiten oder Versetzungen enthalten.

3. System von Proben entsprechend einer der Ansprüchen 1 oder 2, in denen die sogenannten Materialien enthalten in den sogenannten Proben thermolumineszent sind.

4. System von Proben entsprechend einer der Ansprüchen 1 oder 2, in denen die sogenannten Materialien enthalten in den sogenannten Proben photolumineszent sind.

5. Herstellungsverfahren eines Systems der Proben, um eine Lumineszenzvariation auf Distanz zu kommunizieren oder zu bedienen, in denen zwei oder mehrere Proben, jede mindestens ein photolumineszentes oder thermolumineszentes Material enthaltend, gleichzeitig präpariert sind durch Bombardierung, Bestrahlung oder Illumination der sogenannten Materialien mittels mindestens einer Quelle welche direkt oder indirekt Gruppen verschränkter Partikel ausstrahlt, so dass einige erhaltene Quantenverbindungen auf mehrere Proben verteilt werden, der sogenannten Proben sobald sie bombardiert, bestrahlt oder illuminiert getrennt werden ein System verschränkter Proben zu bilden.

6. Herstellungsverfahren entsprechend Anspruch 5, in dem die vorher erwähnten verschränkten Partikel verschränkte Gammaphotonen, Röntgenstrahlphotonen, ultravioletten oder sichtbarenverschränkte Photonen enthalten, zum Beispiel ausgesandt entweder durch ein natürliches oder künstliches radioaktives Material zusammengesetzt aus Atomen, die mehrere Photonen kaskadenförmig ausstrahlen, oder durch ein Ziel bombardiert durch beschleunigte Partikel, die Gruppen Photonen durch den Bremsstrahlungseffekt aussenden, oder durch ein aus Atomen zusammengesetztes Material, das durch Ionisierung kaskadenförmige Gruppen verschränkter Photonen aussendet oder durch einen Generator Gruppen verschränkter Photonen, die diese Photonengruppen aussenden verteilt auf mindestens zwei getrennte und teilweise oder ganz verschränkte Strahlen oder durch eine Kombination dieser Prozesse.

7. Herstellungsverfahren entsprechend Anspruch 5, in dem die vorher erwähnten verschränkten Partikel verschränkter Elektronen, verschränkter Positronen, verschränkter Protonen, verschränkter Atome, verschränkten Molekülen, verschränkter Micellen enthalten oder Kombinationen oder Gesamtheiten dieser Partikel.

8. Herstellungsverfahren entsprechend irgendeiner der Ansprüchen 5 bis 7, in denen die vorher erwähnten Materialien, enthalten in den genannten Proben thermolumineszent sind.

9. Herstellungsverfahren entsprechend irgendeiner der Ansprüchen 5 bis 7, in denen die vorher erwähnten Materialien enthalten den genannten Proben photolumineszent sind.

10. Transmisssionsverfahren um eine Lumineszenzvariation auf Distanz zu kommunizieren oder zu bedienen, in der ein System von Proben, die mindestens ein photolumineszentes oder thermolumineszentes Material hat mindestens einen angeregten Zustand hat und Gruppen einfasst von zwei oder mehreren Elektronen enthalten in den Fallen der so genannten angeregten photolumineszenten oder thermolumineszenten Materialien, die genannten Elektronen verschränkt untereinander und verteilt in den erwähnten Materialien der Proben des so genannten Systems von Proben, so das einige Quantenverbindungen zwischen den erwähnten aufgefangenen Elektronen auf mehreren Proben verteilt werden, danach verschränkte Proben genannt werden und ein Systems der verschränkten Proben formend wird für die folgenden Etappen verwendet:

- Emission von mindestens einer Information oder mindestens einem Steuersignals verursachend mindestens eine modulierte Anregung in Amplituden und/oder in Frequenz auf mindestens einer der erwähnten verschränkten Proben, genannt die verschränkte Masterprobe,
- Bestimmung des Empfangs mindestens einer Information oder mindestens einem Fernsteuerungssignal durch das Messen mindestens einer Lumineszenzvariation teilweise korreliert auf mindestens eine andere der vorher erwähnten verschränkten Proben, genannt die verschränkte Sklavenprobe, während der modulierten Anregung in Amplituden und/oder in Frequenz der vorher erwähnten verschränkten Masterprobe, unabhängig der Entfernungen die die verschränkten Proben trennen und den Umgebungen, die diese verschränkten Proben trennen oder in denen sie platziert sind.

11. Transmissionsverfahren entsprechend Anspruch 10, in dem mindestens eine vorher erwähnte Anregung moduliert in Amplituden und/oder Frequenz auf mindestens einer vorher erwähnten verschränkten Masterprobe, verursacht wird entweder indem man sie in seiner Gesamtheit erhitzt oder durch Erhitzung auf mindestens einem Punkt seiner Oberfläche oder durch optische Anregung unter Verwendung mindestens eines Flash-, Infrarot-, sichtbaren oder UV-Lichts auf seiner Gesamtheit oder durch optische Anregung unter Verwendung mindestens eines Flash-, Infrarotsichtbaren oder UV-Lichts in mindestens einem Punkt seiner Oberfläche oder durch eine Kombination dieser Prozesse.

12. Transmissionsverfahren entsprechend irgendeiner der Ansprüchen 10 oder 11, in denen mindestens eine erwähnte verschränkte Masterprobe und mindestens eine erwähnte verschränkte Sklavenprobe mindestens zwei Arten angeregter photolumineszenter oder thermolumineszenter Materialien enthalten, wobei die teilweise korrelierte Lumineszenzvariation von zwei oder mehreren von ihnen, im Ganzem oder zum Teil auf mindestens einer erwähnten verschränkten Sklavenprobe gleichzeitig gemessen wird.

13. Transmissionsverfahren entsprechend irgendeiner der Ansprüchen 10 bis 12, in denen mindestens eine erwähnte verschränkte Probe mindestens eine Art angeregter photolumineszenter oder thermolumineszenter Materialien enthält, dessen Lumineszenz eine Mehrzahl optischer Linien umfasst, von denen man mindestens eine auf mindestens einer erwähnten Sklavenprobe gemessen wird.

14. Transmissionsverfahren entsprechend irgendeiner der Ansprüchen 10 bis 13, in denen die erwähnte, in Amplituden und/oder in der Frequenz modulierte Anregung, eine Anregung ist die durch Erhitzung von mindestens einer erwähnten verschränkten Masterprobe, in der Zeit moduliert und optimiert von mindestens einem photolumineszenten oder thermolumineszenten Material und, in welchem die teilweise korrelierte Lumineszenzvariation von mindestens einer erwähnten verschränkten Sklavenprobe in Funktion der Zeit gemessen wird, um das Verhältnis des Signals über die Transmissionsgeräusche zu verbessern.

15. Transmissionsverfahren entsprechend irgendeiner der Ansprüchen 10 bis 14, in denen die vorher erwähnte modulierte Anregung, in Amplituden und/oder Frequenz, eine Anregung durch Infrarot-, sichtbare oder ultraviolette Strahlung ist von mindestens einer vorher erwähnten verschränkten Masterprobe, optimiert in Energie der Photonen für mindestens ein photolumineszentes oder thermolumineszentes Material und in welchem die vorher erwähnte korrelierte Lumineszenzvariation von mindestens einer vorher erwähnten verschränkten Sklavenprobe in seiner Spektralantwort gemessen wird, um den Rapport vom Signal über die Transmissionsgeräusche und dem Empfang zu verbessern.

16. Transmissionsverfahren entsprechend irgendeiner der Ansprüchen 10 bis 15, in denen mindestens eine vorher erwähnte verschränkte Sklavenprobe bei einer niedrigen Temperatur die zwischen -273°C und 20°C genutzt wird, um die Nebenwirkung der Phonone hervorgerufen durch die Hitze zu beseitigen, um dadurch ein Emissionsspektrum von Photonen folglich zu erhalten, deren Kennlinien besser definiert sind.

17. Transmissionsverfahren entsprechend irgendeiner der Ansprüchen 10 bis 16, in denen mindestens eine vorher erwähnte verschränkte Probe bei einer niedrigen Temperatur konserviert wird, die zwischen -273°C und 20°C liegt, um das Fading herabzusetzen, das den Nutzungszeitraum der vorher erwähnten verschränkten Probe verlängert.

18. Transmisssionsverfahren entsprechend irgendeiner der Ansprüchen 10 bis 17, in denen mindestens zwei ad hoc Träger eine Mehrzahl von den vorher erwähnten Systemen verschränkter Proben enthalten und, in welchen mindestens eine vorher erwähnte korrelierte Lumineszenzvariation auf mindestens einer vorher erwähnten verschränkten Sklavenprobe, unter Verwendung einer optischen digitalen Kamera gemessen wird, und es möglich macht, die vorher erwähnte Sklavenprobe auf seinem vorher erwähnten Träger zu lokalisieren und somit mindestens eine vorher erwähnte verschränkte Masterprobe zu identifizieren, die angeregt worden ist, demnach gehörend zum gleichen System von verschränkten Proben, auf mindestens einem der anderen Träger, welche die Transmission und die Rezeption von Informationen oder von Fernbedienungen folglich erlaubt.

19. Transmissionsverfahren entsprechend irgendeiner der Ansprüchen 10 bis 18, in denen das vorher erwähnte System verschränkter Proben gleichzeitig ausgehend von zwei oder mehreren Proben, jede mindestens ein photolumineszentes oder thermolumineszentes Material enthaltend präpariert wurde, das mindestens einen angeregten Zustand erreicht durch Bombardierung, Bestrahlung oder Beleuchtung mittels mindestens einer Quelle die direkt oder, indirekt Gruppen verschränkter Partikel ausstrahlt, so dass einige erhaltene Quantenverbindungen auf einige Proben verteilt werden, die vorher erwähnten Proben dann einmal bombardiert, bestrahlt oder belichtet, getrennt, um das vorher erwähnte System verschränkter Proben zu bilden.

20. Transmissionsverfahren entsprechend Anspruch 19 in dem die vorher erwähnten verschränkten Partikel, verschränkte Gammaphotonen, verschränkte Röntgenstrahlphotonen, ultraviolettem oder sichtbaren Lichts verschränkten Photonen enthalten, zum Beispiel ausgestrahlt entweder durch ein natürliches oder künstliches radioaktives Material, aus Atomen bestehend, die mehrere Photone kaskadenförmig ausstrahlen, oder durch ein Ziel der durch beschleunigte Partikel bombardiert wurde, die Gruppen von Photonen durch den Bremsstrahlungseffekt aussenden, oder durch ein aus Atomen zusammengesetztes Material, welches durch Ionisierung Gruppen verschränkter Photonen kaskadenförmig aussendet, oder durch einen Generator von verschränkten Gruppen von Photonen, der diese Photonengruppen in mindestens zwei verschiedene Strahlen getrennt teilweise oder ganz und gar verschränkt aussendet, oder durch eine Kombination dieser Verfahren.

21. Transmissionsverfahren entsprechend Anspruch 19, in dem die vorher erwähnten verschränkten Partikel entweder verschränkte Elektronen enthalten oder verschränkte Positronen oder verschränkte Protone oder verschränkte Atome oder verschränkte Moleküle oder verschränkte Micellen oder Kombinationen oder Gesamtheiten dieser Partikel.

22. Transmissionsverfahren entsprechend irgendeiner der Ansprüchen 19 bis 21 in denen :

   - die Vorbereitung durch die genannte Bombardierung oder die genannte Bestrahlung oder die genannte Beleuchtung mittels von N getrennten Strahlen durchgeführt wurde, die vollständig oder fast vollständig, verschränkt von N bis N sind,
   - eine vorher erwähnte verschränkte Masterprobe vorher mittels von einem der N verschränkten Strahlen präpariert wurde oder von mindestens zwei genannte verschränkte Masterproben vorher mittels von einem der N verschränkten Strahlen präpariert wurden,
   - eine genannte verschränkte Sklavenprobe vorher mittels eines anderen der N verschränkten Strahlen präpariert wurde, oder mindestens zwei vorher erwähnte verschränkte Sklavenproben vorher zusammen mittels eines anderen der N verschränkten Strahlen präpariert wurden,

   N Wert von 2 bis 999.

23. Transmissionsverfahren entsprechend Anspruch 22, in dem N 2 ist, die vorher erwähnten Strahlen sind produziert, zum Beispiel, durch einen nichtlinearen Kristall.

24. Transmissionsverfahren entsprechend irgendeiner der Ansprüchen 10 bis 23, in denen die vorher erwähnten Materialien, enthalten in den vorher erwähnten Proben thermolumineszent sind.

25. Transmissionsverfahren entsprechend irgendeiner der Ansprüchen 10 bis 23, in denen die vorher erwähnten Materialien, enthalten in den vorher erwähnten Proben photolumineszent sind.

26. Vorrichtung **gekennzeichnet dadurch, dass** es besonders einer Mehrzahl der Durchführung von irgendwelchen Ansprüche der Methoden 6 bis 8 für die Produktion von Trägern angepasst ist, die eine Mehrheit der vorher erwähnten Systeme verschränkter Proben enthalten.

27. Quantisches Transmissionssystem **dadurch gekennzeichnet, dass** es besonders der Durchführung der Ansprüche von Methode 10 bis 25 angepasst wird.

Figure 1

Figure 2

Figure 3

Figure 4

Figure 5

Figure 6

**Figure 7**

**Figure 8**

| Matière | Composition chimique | Pic d'excitation nm | Pic d'émission nm | Luminescence visible pendant | Temps d'excitation minutes |
|---|---|---|---|---|---|
| SrS :Ca,Bi | SrS :Ca,Bi | 360 | 480 | 45 jours | 30 |
| ZnS:Cu | ZnS:Cu | 360 | 520 | 200 min. | 4 |
| ZnS:Cu:Mn | ZnS:Cu:Mn | 360 | 640 | 600 min. | 4 |
| SrAl + add. | Conf. | 360 | 640 | 45 jours | 30 |
| SrAl + add. | Conf. | 360 | 650 | 45 jours | 30 |
| SrAl + add. | Conf. | 360 | 670 | 45 jours | 30 |
| SrAl + add. | Conf. | 360 | 680 | 45 jours | 30 |
| SrAl + add. | Conf. | 360 | 580 | 45 jours | 30 |
| SrAl + add. | Conf. | 360 | 500 | 45 jours | 30 |

Add. pour additif non divulgué ; Conf. Pour confidentiel.

**Tableau 1**

| Substance | Molécule | Température du Maximum °C | Longueur d'onde nm | Saturation Gy (J/kg) | Fading (% /année) |
|---|---|---|---|---|---|
| Calcite | $CO_3Ca$ :Impuretés | 275 | | 120 | 0.001 |
| Quartz naturel | $SiO_2$:Impuretés | 370 | 370 460-560 | 1000 | 0.001 |
| Quartz second cycle | $SiO_2$ :Impuretés | 110 | 560 | 400 | 5 |
| Quartz fondu Dopé | SiO2 :Cu | 130-185 | 500 | 400 | 5 |
| Zircon | $ZrSiO_4$ :Impuretés | 300 | 365 | 100 | 0.001 |
| Feldspath Potassique | $Si_3AlO_9$ :K | 150-270 | 380 | 2000 | 0.03 |
| Verre Borosilicate | $SiO_2$-$B_2O_3$-$Al_2O_3$ $Na_2O$ :impuretés | 220 | 500 | 300 | 0.01 |
| Oxyde d'aluminium | $Al_2O_3$ :C | 180 | 325-410 | 50 | 12 |
| Fluorure de lithium | LiF:Mg,Cu,P | 155 | 410 | 1000 | 5 |
| Fluorure de lithium | LiF:Mg,Cu,Na,Si | 230 | 410 | 1000 | 5 |
| Fluorure de Calcium | $CaF_2$:Mn | 285-390 | 340 | 1000 | 5 |
| Sulfate de calcium | $CaSO_4$:Dy | 220 | 340-360 | 100 | 4 |

## Tableau 2

## RÉFÉRENCES CITÉES DANS LA DESCRIPTION

**Documents brevets cités dans la description**

- US 20030133714 A1


**Littérature non-brevet citée dans la description**

- **EINSTEIN A. ; PODOLSKY B. ; ROSEN N.** Can Quantum-Mechanical Description of Physical Reality Be Considered Complete?. *Phys. Rev.,* 1935, vol. 47, 777
- **BELL J. S.** «Speakable and Unspeakable in Quantum Mechanics», New York. Cambridge University Press, 1993
- **ASPECT A.** Trois tests expérimentaux des inégalités de Bell par mesure de corrélation de polarisation de photons. *Doctoral Dissertation,* 01 Février 1983
- **TOWNSEND P. D. ; RARITY J. G. ; TAPSTER P. R.** Single-Photon Interference in 10 km Long Optical-Fiber. *Electronics Letters,* vol. 29, 634
- **DUNCAN A. J. ; KLEINPOPPEN H.** Quantum Mechanics versus Local Realism. Plenum, 1988
- **RICHARDSON B. COBURN ; T. G. CHASTEEN T. G.** Experience the Extraordinary Chemistry of Ordinary Things. John Wiley and Sons, 2003, 343
- **WEBER M. J. ; TOMPSON B. J.** Selected Papers on Photoluminescence of Inorganic Solids. *SPIE Milestone Series,* Août 1998, vol. Ms 150
- **PELTON M. et al.** Triggered single photons and entangled photons from a quantum dot microcavity. *Eur. Phys. J.,* 2002, vol. D 18, 179-190
- **JOHNSON B. D.** Infrared Diode Laser Excites Visible Fluorophores. *Photonics,* Décembre 2001
- **COMPTON K.** Image Performance in CRT Displays. *Tutorial Texts in Optical Engineering, Vol. TT54), SPIE,* Janvier 2003
- **SERGIENKO A. V. ; JEAGER G. S.** Quantum information processing and precise optical measurement with entangled-photon pairs. *Contemporary Physics,* Juillet 2003, vol. 44 (4), 341-356
- **GREENBERGER D.M. ; HOME M.A. ; ZEILINGER A.** Multiparticle Interferometry and the Superposition Principle. *Physics Today,* 1993, vol. 46, 8
- **BLINOV B. B. et al.** Observation of entanglement between a single trapped atom and a single photon. *Nature,* 11 Mars 2004, vol. 428, 153-157
- **JULSGAARD B. ; KOZHEKIN A. ; POLZIK E; S.** Experimental long-lived entanglement of two macroscopic objects. *Nature,* 2001, vol. 413, 400-403
- **JUSTUS B. L. et al.** Dosimetry measurements. CRC Press LLC, 2000
- **SHANI G.** Radiation Dosimetry: Instrumentation and Methods. CRC Press, Janvier 2001
- **BOTTER-JENSEN L. ; MCKEEVER S; W; S. ; WINTLE A; G.** Optically Stimulated Luminescence Dosimetry. Elsevier, 2003
- **MCKEEVER S. W. S.** Thermoluminescence of solids. Cambridge University Press, 1985
- **FURETTA C.** Handbook of Thermoluminescence. World Scientific Publishing, 01 Mars 2003
- **GREENBERGER D. et al.** Bell's Theorem Without Inequalities. *Amer. J. of Phys.,* Décembre 1990, vol. 58 (12
- **SMITH A., V.** How to select non linear crystal and model their performance using SNLO software. Sandia National Laboratory